# EUROPEAN PATENT SPECIFICATION

(11) **EP 3 905 700 B1**
(45) Date of publication and mention of the grant of the patent: **27.11.2024**
(21) Application number: 20171638.8
(22) Date of filing: 27.04.2020
(51) Int. Cl.: H04N 21/2343, H04N 19/30, H04N 19/64, H04N 19/66, H04N 21/2662

(54) **A COMPUTER-IMPLEMENTED METHOD FOR PROGRESSIVE IMAGE TRANSMISSION**
COMPUTERIMPLEMENTIERTES VERFAHREN ZUR PROGRESSIVEN BILDÜBERTRAGUNG
PROCÉDÉ MIS EN UVRE PAR ORDINATEUR POUR TRANSMISSION D'IMAGES PROGRESSIVE

(43) Date of publication of application: 03.11.2021
(73) Proprietor: prioview UG (haftungsbeschränkt), 10435 Berlin (DE)
(72) Inventor: Meyer-Brügel, Wolfram, 10551 Berlin (DE); Goretzki, Stefan, 10435 Berlin (DE)
(74) Representative: Schulz Junghans Patentanwälte PartGmbB

(56) References cited:
- US-A1- 2002 107 988
- US-A1- 2008 158 049
- US-A1- 2018 091 819
- ALBERT MO KIM CHENG ET AL: "Priority-driven Coding and Transmission of Progressive JPEG Images for Real-Time Applications", THE JOURNAL OF VLSI SIGNAL PROCESSING, KLUWER ACADEMIC PUBLISHERS, BO, vol. 47, no. 2, 24 February 2007 (2007-02-24), pages 169 - 182, XP019509466, ISSN: 1573-109X, DOI: 10.1007/S11265-006-0044-3

## Description

The invention relates to a computer-implemented method for progressively transmitting an image or a movie from a transmitter as well as for receiving an image at a receiver

In the art, several image transmission methods are known for progressive image transmission.

Progressive image transmission is particularly important when transmission bandwidth or computational power is limited, as it focusses on a possible provision and display of received image data to a receiver, while the image data is not yet completely received at the receiver.

A very common method for image transmission uses so-called progressive JPEG. JPEG images are based on a frequency transformation such as a cosine or a wavelet transformation, which allows transmission of data packages carrying information on the frequency coefficients associated to image blocks. During transmission of a JPEG image an initial image can therefore progressively built by including on the one hand coefficients for higher frequency components as well as by refining the coefficient values bitwise as the information is received by the data packages. This leads to the well-known progressive "sharpening" during reception and display of an image at the receiver.

Alternatively, image transmission methods are known that transmit the image data line by line.

US 2018/091819 A1 discloses a method that allows adapting transmission to a varying bandwidth by applying predefined transmission profiles to the image data. The application focusses on cross-layer optimization in compressed image transmission and deals with error correction and redundancy issues that are improved resolved by applying specific transmission profiles. Said transmission profiles comprise parameters defining a degree of compression, quantization level and the like, such that a layered compressed data stream may be transmitted that is adapted to the available transmission bandwidth.

Several attempts have been made to customize image transmission particularly to its content, i.e. to prioritize a specific area, in the image that is to be transmitted first, before any other image information is transmitted.

Such methods allow the provision of information from a region of interest (ROI) in the image that is predefined by the transmitter and that might carry certain information of interest.

Such a method is for example taught in US 735 5608 B1, where a user can select one or more regions of interest (ROI) that are to be transmitted prior to other regions in the image. After selection of the ROI, the image data is sorted accordingly and stored in a prioritized graphics file, before transmission is facilitated. Then, first the ROI is completely transmitted and only then other regions in the image are transmitted.

While this method provides some flexibility to image transmission, it requires a pre-sorting of the image data prior the image data to be sent. This in turn requires additional memory storage and computational capacities in order to rearrange the image data and generate a prioritized graphics file. The transmission process commences at the first bits of the rearranged image data proceeds by successively transmitting the bits according to their position in the rearranged image file.

A major drawback in this approach however is the requirement to generate an additional image file, which then leaves no flexibility with respect to any rearrangement or reprioritization during transmission.

Moreover, the approach is entirely non-applicable to mobile device due to their limited computational and data storage capacities.

An object of the present invention is to provide a computer-implemented method for progressive image transmission that provides a flexible, computationally light and data storage-economic solution to the above problems. The object is achieved by the method having the features of claim 1.

Advantageous embodiments are described in the dependent claims.

According to a first aspect of the invention a computer-implemented method for progressively transmitting an image or a movie from a transmitter, particularly to a receiver comprises at least the steps of:
- Acquiring image data representing an at least two-dimensional image, wherein the image data is arranged in an n-dimensional data array of a plurality of array values, wherein the image data are arranged in the n-dimensional data array such that along each dimension of the data array an aspect of image information is stored, wherein a first aspect of image information that is arranged along a first and a second dimension of the data array is associated to a location in the image,
- Selecting m dimensions of the n-dimensional data array to form an m-dimensional primary array, particularly wherein m is an integer number, wherein the dimensions of the data array relating to the location of image information in the image are selected to be comprised in the primary array, wherein said primary array comprises subarrays, wherein each subarray comprises some of the array values of the data array, wherein said some of the array values extend in the remaining d dimensions of the data array, wherein *d = n* - *m,* such that each element of the primary array (1) consists of one subarray (2) within which the remaining d = n - m dimensions are stored, such that each dimension of the data array extends either in the primary array (1) or in the subarray (2), wherein the size of the respective dimension remains the same, wherein dimensions of the data array relating to a bit depth are selected to be comprised in the subarray (2), wherein the array values of the subarrays are indexed with an index, wherein said index is the same for all subarrays,
- Selecting a plurality varying priority profiles comprising a plurality of varying priority values,
- Associating each priority profile to at least one dimension of the primary array, wherein each priority profile confers a varying priority of transmission to the subarrays arranged along the associated dimension(s) of the primary array,
- Merging the one or more selected priority profiles to a single aggregated priority profile having aggregated priority values, such that each subarray is associated to one of the aggregated priority values, wherein said aggregated priority profile is expressed as a function and is continuous, wherein from the aggregated priority values together with the index, the priority of transmission for each array value is determined,
- Transmitting the plurality of array values from the transmitter according to the priority of transmission and according to the index associated to the array value for reconstructing a received image with the transmitted array values, the priority profiles and/or the aggregated priority profile, and the index, such that image data associated to array values having a higher priority of transmission can be displayed first and particularly at higher quality levels at a receiver,
- Particularly each time array values are received at the receiver or in predefined time intervals reconstructing a received image with the received array values, the at least one priority profile, and the index,
- Particularly displaying the received image.

The term "acquiring image" particularly comprises transformation, filtering or preprocessing methods applied to an image, such as for example a transformation from an RGB-image data to a different image data format, such as for example JPEG.

The acquisition of image data particularly includes a reception of image data from a device, such as for example from a memory storage on which the image has been stored in form of image data or any image generating device, such as a camera.

According to an embodiment of the invention, the image is a two- or three-dimensional image. The image data particularly represent volumetric data, depth data or two-dimensional image data.

An image in the context of the current specification comprises image data, particularly wherein said image data is particularly digital image data or digitized image data. Moreover, the image data particularly consists of binary image values.

In the context of the current specification, the term "image data" particularly refers to the portion in an image file that comprises information about the image as compared to a header portion of an image file that for example provides information about image dimensions and a type of image file as well as reading instructions.

Throughout the specification it is assumed that such header information comprising information about an image size is accessible to the transmitter as well as a receiver.

It is further noted that in the context of the specification a reference to a data array, an array of values, or any kind of ordered data structure serves the purpose of illustrating the invention rather than to limit the invention to such specific structure. It is known to the person-skilled in the art that particularly on data memory level of computers, values are not stored in form of arrays values, but physically on different portions in the memory. Moreover, any ordered array can be always indexed in a linear or another equivalent fashion. However, for the purpose of illustration and to maintain a level of generality, without limitation of generality, in the context of the current specification any reference to structured data structures such as arrays or sub-arrays is to be understood particularly such that already the possibility of a mapping, e.g. by means of a bijective function, of values to such a structure is considered to be arranged in such a structure.

According to an embodiment of the invention, the image data can be or is arranged in an n-dimensional data array of array values, wherein *n* is an integer number larger than two, particularly larger than four.

According to another embodiment of the invention, d equals zero and m equals *n*, such that the subarrays comprise one array value only and the index comprises only one index value.

According to another embodiment of the invention, d and m are larger than zero.

According to another embodiment of the invention, the n-dimensional data array is of size s*₁ × s₂ ×... × sₙ,* wherein *sᵢ*, *i* being an index integer between 1 and *n*, is the size of the data array along the *i^{th}* dimension of the *n*-dimensional data array.

According to another embodiment of the invention, the *m*-dimensional primary array is of size *p₁ ×* ... *× pₘ,* wherein *pⱼ, j* being an index integer between 1 and m, is the size of the primary array along the *j^{th}* dimension of the *m*-dimensional primary array.

The size of the primary array is smaller than the size of the data array.

Particularly, each element of the primary array consists of a subarray within which the remaining *d = n* - *m* dimensions are stored.

According to another embodiment of the invention, the d-dimensional subarray is of size *d₁ ×* ... *× d_{d},* wherein *dₖ, k* being an index integer between *1* and *d*, is the size of the subarray array along the *k^{th}* dimension of the d-dimensional subarray.

According to another embodiment of the invention, each dimension of the data array extends either in the primary array or in the subarray, wherein the size of the respective dimension remains the same.

The representation of the primary array in combination with the subarray particularly illustrates that the dimensions comprised by the primary array are processed in a different manner than other dimension that are comprised in the subarrays as elaborated in the claims and the description.

The subarrays all comprise the same number of array values.

According to another embodiment of the invention, the index is configured such that it provides a unique order to the elements, i.e. the array values of the subarrays.

As the index is the same for all subarrays, the index needs to be stored only once, which saves memory space as for example compared to a complete indexing of each array value for the whole n-dimensional data array.

This way the index is particularly a one-dimensional index vector mapping the elements of the subarrays according to a priority for transmission for the specific element.

The index vector has particularly D = *d₁ ×* ... *× d_{d}* index values, i.e. the same number of index values as array values in each subarray.

According to another embodiment of the invention, the index comprises sorted index values, particularly wherein array values associated to a lower index value in the subarray have a higher priority of transmission than array values associated to a higher index value in the same subarray. Obviously, a reverse assignment of index values is possible and yields an equivalent effect.

According to another embodiment of the invention, the array values are the smallest entity of the data array, i.e. the array values are not sub-dividable or sub-divided in smaller portions during the method according to the invention.

Particularly, within a single array value no further indexing is provided. Particularly, the array values are binary values, particularly wherein each array value consists of a single bit only.

According to another embodiment of the invention, the data array is a binary data array.

Selection of the dimensions that are to be comprised in the primary array and the dimensions that are to be comprised in the subarrays can be done essentially randomly.

However, selections are particularly based on the size of the respective dimension and an associated aspect of image information.

According to another embodiment of the invention, dimensions of the data array relating to a location of image information in the image are selected to be comprised in the primary array.

According to another embodiment of the invention, dimensions of the data array relating to a bit depth of an array value are selected to be comprised in the subarray.

It is noted that by selecting/assigning dimension of the data array to the primary array or the subarray, the image data are not stored again or as a modified copy of the image.

According to the invention, at least one priority profile is selected that is associated to at least one dimension of the primary array.

According to another embodiment of the invention, the number of priority values of the at least one priority profile equals the size of the primary array along the at least one dimension the priority profile is associated to.

For example, assuming a first priority profile extends along a first dimension of the primary array. Assuming further that said first dimension has the size of *p₁*, i.e. in each layer (e.g. each row, column) of the primary array, *p₁* subarrays are arranged along the first dimension. Then, the first priority profile has *p₁* priority values, wherein each priority value is associated to the subarrays in a layer extending along a different dimension than the first dimension.

It is noted that a priority profile can be associated to more than one dimension. According to another embodiment of the invention, the priority profile has the same dimension as the number of dimensions it is associated to.

For example, a two-dimensional priority profile is associated to two dimensions from the primary array.

For example, an m-dimensional priority profile is associated to m dimensions from the primary array.

Particularly, the number of priority values of the priority profile is identical to the product of the sizes of the dimensions the priority profile is associated to.

Each priority value particularly confers a priority of transmission to the subarrays it is associated to.

According to another embodiment of the invention, the priority values in the at least one priority profile assume at least two different values, particularly a plurality of values.

It is noted that while the index has to remain unaltered until the complete image is transmitted to a receiver, it is possible to alter the priority profile as long as the receiver is informed about said change and is provided with the altered priority profile.

This allows a very flexible mode of prioritized transmission.

For example, if the image is a map comprising a receivers position. A possible priority profile could center around the receivers position having its highest priority values at and around the center of the receiver's position on the map. The priority profile therefore, would be associated to a location of image information in the image and could be a two-dimensional priority profile, e.g. a Gaussian-bell-shaped priority profile centered at the receiver's position on the map. The further apart a location on the map is from the position of the receiver the lower the priority profile values might become. In case the receiver changes its position on the map during transmission, according to the invention it is possible to select or amend the priority profile such that the center remains at the (new) position of the receiver such that image information is transmitted with highest priority always at the position of the receiver.

For this purpose, a selection of dimensions comprised in the primary array is particularly done with respect to the specific application, having in mind that priority profiles, particularly priority profile values, can be changed during transmission whereas changing the index for the subarrays is not.

The transmission step particularly comprises compression, particularly lossless compression and other preprocessing steps known in the art, e.g. for reducing transmission bandwidth.

It is noted that memory requirements of the method according to the invention, are particularly essentially determined by the size and the number of dimensions of the subarray rather than the by the size of the primary array.

Therefore, by selecting primary and subarray accordingly almost any memory requirement can be met.

Additionally, this embodiment allows reducing processing time on the computer that would be required if an image is sorted/rearranged completely prior transmission.

According to another embodiment of the invention, aggregated priority values are determined, particularly by multiplying all priority values that relate or refer to the same subarray, from the one or more priority profiles, such that each subarray of the primary array is associated with a single associated aggregate priority value only, particularly wherein the aggregated priority value is determined by way of a cascading aggregation, particularly a cascading multiplication of the priority values of a first priority profile of the one or more priority profiles and the priority values of at least a second priority profile of the one or more priority profiles, particularly wherein the plurality of aggregated priority values form an aggregated priority profile, particularly wherein said aggregated priority profile is continuous and/or non-linear and/or has a local extremum.

This embodiment allows for a less complex way of processing the image data in the primary array.

Moreover, this embodiment allows merging for example user selected and/or user created priority profiles to a single aggregated priority profile.

For a user it might be more conceivable to first create a priority profile for one aspect of image information, e.g. a priority of transmission with respect to a location in the image and then for example a second priority profile with regard to a sharpness or color information in the image, a merging of the priority profiles allows a unified approach for executing the method according to the invention. Moreover, it might not be conceivable to a user, to create a priority profile with more than three dimensions at once.

The aggregated priority values together with the index allow for a determination of a priority of transmission for each array value.

According to another embodiment of the invention, the index consists of index values, wherein the array values of each subarray are uniquely indexed (in the same order) by means of the index values, such that the array values can be sorted according to the index and/or wherein the index assigns a unique order of transmission to the array values in the subarrays.

Particularly, the index as well as the priority profiles or only the aggregated priority profile are stored. This allows for little memory usage, particularly because during transmission in a for-loop fashion provided by the priority profile(s), the subarrays are iteratively addressed and thus it is not necessary to index/reorder the whole image up front. The method according to the invention strikes a smart and flexible compromise particularly by partly iterating through the image data, which does not require additional memory space, and partly indexing the image which is fast, but requires some memory.

As the number of dimensions for the primary array and the number of dimensions comprised in the subarrays can be selected, for each application and each hardware requirement an optimal choice can be made.

According to another embodiment of the invention, in the image data are arranged or can be arranged such in the n-dimensional data array that along each dimension an aspect of image information is stored, particularly wherein an aspect of image information is one or more of:
- A location in the image, particularly a two- or three-dimensional location,
- A sharpness,
- A spatial frequency coefficient, such as a DCT-coefficient,
- A color channel,
- A color,
- A pixel array block,
- A position in a sequence of images, particularly a time in the movie,
- A bit depth of a color, and/or
- A bit depth of a spatial frequency coefficient, such as a DCT-coefficient.

The location in an image can be a two-dimensional position associated to some kind of coordinate or indexing system. The location might be provided in terms of a block number and/or a x-y(-z) coordinate.

The sharpness particularly refers to various spatial frequency features in the image.

The bit depth is applicable to almost all aspects of image information. For example, for coding a specific color in a color space having 16 bit color depth, it is possible to transmit the 16 bit coding for the color by means of an transmission priority, such that the color will be progressively detailed. In an analogue fashion also the bit depth of the spatial frequency coefficients can be progressively transmitted according to the method.

According to another embodiment of the invention, the frequency coefficients are generated by a wavelet transformation and are wavelet coefficients.

According to another embodiment of the invention, transmission is executed in transmission cycles, wherein in each transmission a data package is transmitted to a receiver comprising information on image data allowing the prioritized and progressive image reconstruction on the receiver side.

For example, a data package is generated at the transmitter, wherein said data package has a limited data size, particularly smaller than the image data size, such that the transmission of array values has to be split in a plurality of data packages. Thus, according to this embodiment of the invention, the array values are transmitted in a plurality of transmission cycles, wherein in each transmission cycle a data package is transmitted. Therefore, in a series of transmission cycles, there is a current transmission cycle as well as a previous transmission cycle that preceded the current transmission cycle (except if the current transmission cycle is the first transmission cycle in said series).

According to another embodiment of the invention, for a current transmission cycle of the transmission, a data package to be transmitted with a projected data package size is generated by the steps of:
a) determining from the projected data package size a projected total number of array values to be transmitted in the current transmission cycle to a receiver,
b) scaling the aggregated priority profile with a proportionality factor, such as to obtain a scaled aggregated priority profile comprising scaled aggregated priority values, wherein a sum of all scaled aggregated priority values essentially equals the projected total number of array values to be transmitted in the current transmission cycle,
c) determining a data volume profile with data volume profile values for the current transmission cycle, wherein the data volume profile is determined from a sum, particularly a rounded-down sum of the scaled aggregated priority profile for the current transmission cycle and the scaled aggregated priority profiles of, particularly all, preceding transmission cycles, particularly wherein the data volume profile comprises data volume values determined from a sum of the scaled aggregated priority profile values for the current transmission cycle and the scaled priority profile values of particularly all preceding transmission cycles,
d) selecting for each subarray, the array values associated to index values that are higher than the data volume profile value of the data volume profile of the preceding transmission cycle and index values that are lower than or equal to the data volume profile value of the data volume profile of the current transmission cycle,
e) generating the data package to be transmitted comprising the selected array values,
   particularly determining the data package size of the generated data package,
   particularly updating, particularly storing, for each subarray an information on the number of transmitted array values for each subarray in the current transmission cycle,
f) storing the scaled aggregated priority profile for the current cycle, and/or the data volume profile for the current transmission cycle,
g) transmitting the data package for the current transmission cycle.

According to this embodiment, the transmission is based on discrete data packages that each comprises a more or less predefined amount of information, wherein the amount of information comprised in each data package might vary from transmission cycle to transmission cycle.

This embodiment allows for taking full advantage of the method according to the invention, as for example for very limited bandwidth transmission, this embodiment allows transmission of the array values having the highest priority of transmission, while progressively transmitting array values having lower priority of transmission.

Particularly, the embodiment demonstrates how the trade-off between indexing of the array values in the subarrays and priority profile allows for an efficient determination of the array values to be transmitted.

Moreover, this embodiment even allows for adjusting the at least one priority profile (and thus the aggregated priority profile) between transmission cycles. Obviously both parties, the transmitter as well as the receiver must be informed about the adjustment and will need to be provided with the adjusted priority profile(s).

According to this embodiment of the invention, transmission of array values is performed in repeated transmission cycles, progressively transmitting the array values according to the priority of transmission.

Particularly in step b) the aggregated priority profile is normalized to comprise an area under the curve of one, i.e. the sum of aggregated priority profile values equals one, and wherein the scaled aggregated priority profile thus comprises an area under the curve equal to the proportionality factor, i.e. the sum of all scaled aggregated priority values equals the proportionality factor.

The scaled aggregated priority profile particularly enables a first estimation of the array values to be transmitted in the current transmission cycle.

According to step c) of this embodiment, the data volume profile is used for determining not only the number of array values per subarray that are to be comprised in the data package, but also for explicitly identifying the array values in the subarray. For this purpose, it is important to know which array values of the subarray have already been, particularly successfully, transmitted to a receiver in a previous transmission cycle and which of the array values are to be transmitted in the current transmission cycle.

In step d) the connection between the data volume profile and the index values is made, such that the array values of the subarrays are transmitted according to their associated index values. The index values of the selected array values particularly provide an order in the data package.

This step allows identifying the specific array values to be comprised in the data package, as the number of array values has been determined already in a previous step.

Once all array values to be comprised in the data package are selected, in step g) the data package to be transmitted in the current transmission cycle is generated.

Particularly prior to step g) information regarding the transmission process is updated by the method such that all relevant parameters are updated and stored.

Storage can for example be performed with a suitable data storage device.

According to another embodiment, information stored from the previous transmission cycles is used for determining the scaled aggregated priority profile and/or the data volume profile. This step particularly comprises information about the number of transmitted array values, information suitable to reconstruct the data volume profile, particularly the data volume profile values, and/or a marking information conferred to the array values, particularly by replacing the values with an reserved indicator value (e.g. 0,NULL, NaN) or by storing a logical value array.

According to another, particularly alternative embodiment of the invention, for a current transmission cycle of the transmission, a data package to be transmitted with a projected data package size is generated by the steps of:
a) determining from the projected data package size a projected total number of array values to be transmitted in the current transmission cycle to a receiver,
b) scaling the aggregated priority profile with an accumulated proportionality factor, such as to obtain an accumulated scaled aggregated priority profile comprising accumulated scaled aggregated priority values, wherein a sum of all accumulated scaled aggregated priority values essentially equals the sum of the projected number of array values to be transmitted in the current transmission cycle and the number the array values that have been transmitted in all preceding transmission cycles,
c) determining a data volume profile for the current transmission cycle, wherein the data volume profile comprises the rounded-down accumulated scaled aggregated priority profile values as data volume values for the current transmission cycle,
d) selecting for each subarray, the array values associated to index values that are higher than the data volume profile value of the data volume profile of the preceding transmission cycle and index values that are equal the data volume profile value of the data volume profile of the current transmission cycle,
e) generating the data package to be transmitted comprising the selected array values,
   particularly determining the data package size of the generated data package,
   particularly updating, particularly storing, for each subarray an information on the number of transmitted array values for each subarray in the current transmission cycle,
f) storing the scaled aggregated priority profile for the current cycle, and/or the data volume profile for the current transmission cycle,
g) transmitting the data package for the current transmission cycle.

According to another embodiment of the invention, the number of array values taken from a subarray projected to be comprised in the data package of the current transmission cycle is adjusted to
∘ zero, if all array values of the subarray have been transmitted or particularly if the data volume profile value of the current transmission cycle is smaller than the data volume profile value of the preceding cycle for the subarray,
∘ to a remainder of array values in the subarray, if the data volume profile value of the subarray exceeds the number of index values,
particularly wherein the proportionality factor is adjusted, particularly iteratively or analytically to compensate for a deviation between the total number of array values selected to be comprised in the data package of the current transmission cycle and the projected total number of array values to be transmitted in the current transmission cycle.

This embodiment allows for adjusting the data volume profile in case all array values of a subarray have been transmitted. This is particularly advantageous towards an end of the transmission, when in some subarrays all array values have been transmitted. The embodiment further allows for adjusting the data volume profile in case the aggregated priority profile has been changed during transmission. In this case the accumulated scaled aggregated priority values in the current transmission cycle may be lower than the data volume profile values in the preceding cycle for some subarrays. For other subarrays, the accumulated scaled aggregated priority values will be higher. According to this embodiment, for those subarrays having lower values associated, the data volume profile values will be adjusted to equal the data volume profile values of the preceding transmission cycle.

The proportionality factor can be increased or decreased, such that after adjusting the data profile values of the data volume profile, the resulting total number of array values to be comprised in the data package is closer or identical to the projected number of array values or the projected data package size. The required amount of increase or decrease may be determined prior to adjusting the data volume profile in a closed analytical form. The required amount may be determined either exactly or approximatively, particularly under the assumption that the subarrays affected by the adjustment of the data volume profile remain the same as in the previous transmission cycle. Alternatively, an iterative solution procedure, particularly according to the following embodiment may be applied.

According to another embodiment of the invention, a deviation of the data package size of the generated data package from the projected data package size is determined, wherein if the deviation is larger than a predefined threshold value, steps b) to f) of claim 4 are repeated with an adjusted proportionality factor before step g), until the deviation is lower than the predefined threshold value.

This embodiment allows for a closer match between the resulting data package size and the projected data package size.

According to another embodiment of the invention, each priority value is associated to a layer in the primary array, wherein the layer comprises the subarrays to which the priority value confers the priority of transmission to, particularly wherein a layer of the primary array is a row, a column, a sheet, and/or a page of the primary array. According to another embodiment of the invention, a layer extends along all dimensions of the primary array to which the priority profile is not associated to.

For example, if the primary array is a three-dimensional array and a first priority profile is a one-dimensional profile which is associated to the first dimension of the primary array, then the associated layer is a two-dimensional layer and extends along the second and third dimension.

For example, if the primary array is a three-dimensional array and a first priority profile is a two-dimensional profile which is associated to the first and second dimension of the primary array, then the associated layer is a one dimensional layer and extends along the third dimension.

According to another embodiment of the invention, the at least one priority profile or the aggregated priority profile varies non-linearly along the at least one dimension it is associated to, particularly wherein said priority profile comprises priority values that vary non-linearly along said dimension.

This allows for example a clear a distinction between regions in an image that are transmitted in with a high priority of transmission versus regions that are not transmitted with such a high priority.

It is noted that this embodiment is not limited to regions in terms of spatial portions in an image. Examples relating to regions in the image are merely chosen for illustrative and intuitive examples. However, a particular strength of the invention is its applicability to all aspects of image information and not only to a region in the image. Even more, during transmission the importance of other aspects of image information can be adjusted over other aspects of image information by adjusting the corresponding priority profile(s).

According to another embodiment of the invention, the at least one priority profile, or the aggregated priority profile is expressed as a function, particularly a mathematical function.

According to another embodiment of the invention, the plurality of priority profiles or the aggregated priority profile varies continuously along the at least one dimension it is associated to, particularly wherein said priority profile or the aggregated priority profile comprises priority values that vary continuously along said dimension.

This allows for a naturally appearing progressive image transmission and reconstruction.

In addition, this embodiment allows for sorting different aspects of image information according to almost any priority of transmission, rendering the method according to the invention very flexible.

According to another embodiment of the invention, at least one priority profile of the at least one priority profile or the aggregated priority profile exhibits a local extremum, particularly wherein said priority profile comprises priority values that exhibit a local extremum.

The term "local extremum" particularly relates to a function with a maximum or a minimum value that is particularly not at the limits of its definition range, wherein the definition range relates to the input variables, which in the current specification particularly relate to some subarray indices for indexing the subarrays in the primary array (which is not to be confused with the index associated to each subarray).

Alternatively, one could describe a local extremum with a portion in the profile that is enclosed by neighbouring profile values, wherein all neighbouring values either have higher or all neighbouring values have lower values then said region.

The terms "non-linear", "continuous" or terms that relate to a property of the priority profile, the aggregated priority profile or their values are to be understood as common in the art, particularly wherein the priority profile or the aggregated priority profile are expressed by a function.

For example, the at least one priority profile can be expressed as a one- or two-dimensional Gaussian profile.

The Gaussian Profile is non-linear and continuous with respect to its variables, which particularly correspond to an index of the subarray in the primary array. Moreover, the Gaussian profile has a local maximum that is centered around a center position. Alternatively, a ramp profile can be chosen as the priority profile.

According to another embodiment of the invention, the acquired image data comprises at least a 5-dimensional data array, particularly wherein the image data is stored in an JPEG format, wherein
- a first dimension of the data array relates to a block-x coordinate,
- a second dimension of the data array relates to a block-y-coordinate,
- a third dimension of the data array relates to a subsample number,
- a fourth dimension of the data array relates to frequency coefficients, particularly frequency coefficients of a discrete cosine transformation (DCT), particularly wherein there are 64 frequency coefficients,
- a fifth dimension of the data array relates to a bit depth of each frequency coefficient, particularly wherein the bit depth is 16 bits for each frequency coefficient,
wherein the primary array comprises the first, the second and the third dimension and wherein each subarray comprises the fourth, and fifth dimension, wherein a first priority profile is a two-dimensional priority profile associated to the first and the second dimension and wherein a second priority profile is associated to the third dimension, wherein the index indexes the array values of the fourth and the fifth dimension comprised in each subarray, particularly wherein the frequency coefficients are transmitted according to JPEG standard that defines the order transmission for the frequency coefficients, wherein the index is indexing the array values such that the frequency coefficients are transmitted sequentially, particularly such that all bits of a frequency coefficient are transmitted before a next frequency coefficient is transmitted.

The term "JPEG" is defined in the art and relates to a data format for storing digital images.

The embodiment allows for prioritized transmission of an image such that a location in the image is prioritized particularly with respect to the spatial frequencies in the image, such that successively the prioritized locations or regions in the image reach a sharper and spatially higher resolved impression prior to locations or regions in the image that are assigned to lower priority profile values, or that are assigned to lower aggregated priority profile values.

This embodiment allows for a prioritized transmission and reception of image data in a broad field of applications and particularly allows for JPEG images to be transmitted differently to the known progressive image transmission, which are for example:
- a line by line transmission of the image,
- a progressive transmission of the frequency coefficients, wherein there are no prioritized regions or locations in the image.

According to another embodiment of the invention, a receiver selects at least one priority profile and transmits information comprising the at least one priority profile to the transmitter and/or wherein the transmitter selects at least one priority profile and transmits information comprising the at least one priority profile to a receiver, particularly wherein the priority profile selected by the receiver and the priority profile selected by the transmitter are associated to different dimensions of the primary array.

According to this embodiment the information transmitted between receiver and transmitter, is sufficient to reconstruct the at least one priority profile, particularly wherein the information comprises parameters that are configured to reconstruct the priority profile.

This allows for example to adjust a priority profile that is expressed in terms of a function, by adjusting at least one parameter of the function.

This in turn allows for a particularly bandwidth economic adjustment or exchange of priority profiles between the transmitter and a receiver.

According to another embodiment at least one priority profile, particularly all priority profiles, is expressed in terms of a function that is uniquely defined by a set of parameters, wherein at least one parameter of the set of parameters, particularly information relating to said parameter is transmitted from the receiver to the transmitter and/or wherein at least one parameter of the set of parameters, particularly information relating to said parameter is transmitted from the transmitter to the receiver.

For example, if the priority profile is a Gaussian profile, then a first parameter can relate to a center of the Gaussian profile wherein a second parameter relates to a width of the Gaussian profile. According to the invention, both parameters can be defined either completely by the receiver or by the transmitter or wherein the transmitter defines one of the parameters and provides information regarding to this parameter to the receiver and the receiver defines the other parameter and provides information regarding to this parameter to the transmitter.

At any time during transmission the transmitter and/or the receiver can adjust the parameter such that the priority profile is adjusted.

This embodiment allows for the transmitter and/or the receiver to contribute to the priority profile.

According to another embodiment of the invention, the at least one priority profile, particularly all priority profiles are predefined and are stored at the transmitter and the receiver.

According to another embodiment of the invention, at least one of the one or more priority profiles is adjusted while the image is being transmitted, particularly wherein when the priority profile is adjusted, the adjusted priority profile or information about the priority profile provided to the transmitter and the receiver, particularly wherein any data package that is transmitted after the at least one priority profile has been adjusted is generated and assembled according to the adjusted priority profile, particularly wherein the adjusted priority profile is associated to the same dimension(s) of the primary array, particularly wherein the index remains unaltered.

According to another embodiment of the invention, the index defines a varying index profile particularly wherein the index profile is selected or generated at the transmitter or the receiver.

The index profile can be understood as a priority profile for each subarray, wherein during transmission said index profile cannot be adjusted.

This embodiment allows for a versatile and individual indexing of the subarrays particularly such that a user of the method can adapt the method to the specific application.

According to anther embodiment of the invention, the receiver is arranged in a vehicle, particularly an aircraft, a watercraft or a transportation vehicle, such as a car, wherein the image is an image comprising a map, particularly a weather map, a street map or a water map comprising the position of the vehicle, wherein the at least one priority profile is a two-dimensional priority profile prioritizing the transmission of image data related to the location in the image, wherein the priority of transmission is highest, particularly has a local maximum at the position of the vehicle on the image, such that information adjacent to the position of the vehicle is transmitted with highest priority and information further away from the position of the vehicle in the image is transmitted with lower priority.

According to another embodiment of the invention, the index is determined from at least one index profile particularly by means of a bit order of the subarray, or by a randomly selected order.

According to a second aspect of the invention, a computer-implemented method, particularly according to one of the previous embodiments, for progressively reconstructing an image or a movie at a receiver comprises the steps of:
- Providing an index comprising a plurality of index values to the receiver, particularly wherein the index is received from a transmitter and/or stored at the receiver,
- Providing one or more priority profiles or an aggregated priority profile to the receiver, particularly wherein the one or more priority profiles or an aggregated priority profile is received from a transmitter and/or stored at the receiver, wherein said aggregated priority profile is expressed as a function and is continuous,
- Receiving information about image data representing an at least two-dimensional image,
- Forming, particularly reserving memory at the receiver and/or generating at the receiver an n-dimensional data array of array values to be received for the image data,
- Determining m dimensions of the n-dimensional data array to form an m-dimensional primary array, wherein said primary array comprises subarrays, wherein each subarray comprises the array values to be received of the data array and wherein the array values extend in the remaining d dimensions of the data array, wherein *d* = *n - m*, such that each element of the primary array consists of one subarray within which the remaining *d = n* - m dimensions are stored, such that each dimension of the data array extends either in the primary array or in the subarray, wherein the size of the respective dimension remains the same, wherein dimensions of the data array relating to a bit depth are selected to be comprised in the subarray, wherein the array values to be received of the subarrays are indexed with the index, wherein said index is the same for all subarrays, particularly wherein each array element consists of the same number of array values, particularly wherein the determination of the primary array and the subarrays is based on the index and the at least one priority profile or the aggregated priority profile,
- Associating the aggregated priority profile to the corresponding dimensions of the primary array, wherein the aggregated priority profile confers a varying priority of transmission to the subarrays arranged along the associated dimension(s) of the primary array,
- Receiving array values from a transmitter particularly according to the priority of transmission and particularly according to the index associated to the array value for reconstructing a received image with the received array values,
- Each time array values are received at the receiver or in predefined time intervals reconstructing a received image with the received array values, the at least one priority profile, and the index, such that image data associated to array values having a higher priority of transmission than image data associated to array values with a lower priority can be displayed first at the receiver,
- Particularly displaying the reconstructed image.

It is noted that this aspect of the invention can be treated as an independent aspect of the invention that relates to a computer-implemented method for receiving an image or as a dependent aspect of the first aspect of the invention.

The second aspect of the invention, essentially relates to reception of an image at the receiver, wherein a prioritized transmission of the image data is achieved according to the one or more priority profile or the aggregated priority profile and the index.

Particularly the method steps disclosed for the first aspect of the invention are executed in an analogue way at the receiver such that a received image is reconstructed progressively and in a prioritized fashion as defined by the one or more priority profile and the index.

Therefore, terms and definitions disclosed for the first aspect do apply in at least an equivalent fashion to the second aspect and are explicitly made an optional part for the second aspect of the invention that can serve for formulating a claim.

The reception of array values is particularly in form of information relating to the array values. This information can comprise the array values in compressed, filtered or another processed fashion, as long as the array values are to be recovered at least approximately but particularly exactly by the receiver.

According to a third aspect of the invention, a computer program is disclosed, wherein the computer-program comprises computer program code that when executed on a computer, executes the computer-implemented method according to the first and/or second aspect of the invention.

Which aspect of the invention is executed depends where the computer program is executed. If the computer program is executed at or for the transmitter, the computer program executes the computer-implemented method according to the first aspect, wherein if the computer program is executed at or for the receiver, the computer program executes the computer-implemented method according to the second aspect.

The computer program is particularly configured to operate transmission and/or reception components of the transmitter and/or receiver.

Moreover, the computer-program can have a user interface such that a user can select, adjust or generate the at least one priority profile and/or the aggregated priority profile and/or the index the index.

Furthermore, the computer program can comprise a selection tool for a user that allows the user to select the dimensions comprised in the primary array.

Additionally or alternatively, the computer program can comprise a selection tool for a user that allows the user to select the dimensions comprised in the subarrays.

Said selection tool is particular implemented in the user interface.

A user interface can be a voice control component, a display connected to or comprising a control component for selecting, adjusting and/or generating the priority profile and/or the index.

According to a third aspect of the invention, a receiver is disclosed, said receiver is configured to execute the steps of the computer-implemented method and/or the computer program that are to be executed at the receiver.

The receiver comprises a receiving component for receiving information, particularly wherein said receiving component comprises an antenna for receiving and sending electro-magnetic waves, particularly radio-waves.

The receiver is connected to or comprises a computer for executing the computer-implemented method and/or the computer program.

According to a fourth aspect of the invention, a transmitter is disclosed, said transmitter is configured to execute the steps of the computer-implemented method and/or the computer program that are to be executed at the transmitter.

The transmitter comprises a transmission component for receiving information, particularly wherein said receiving component comprises an antenna for receiving and sending electro-magnetic waves, particularly radio-waves.

The transmitter is connected to or comprises a computer for executing the computer-implemented method and/or the computer program.

Terms and definitions disclosed for the first and the second aspect of the invention apply in at least in an equivalent fashion to the third and the fourth aspect and are explicitly made an optional part for the third and fourth aspect of the invention that can serve for formulating a claim.

According to a fifth aspect of the invention, a system is disclosed, wherein said system comprises the transmitter and at least one receiver according to the invention.

The transmitter, the receiver or the computer can be a computerized device, such as a mobile device.

The term "computerized device" particularly denotes an apparatus comprising one or more processors operable or operating according to one or more programs.

A computerized device for example comprises an operating system capable of running apps - software applications designed to run on computerized devices.

Furthermore, the computerized device comprises a memory or data storage for storing information.

The term "mobile device" is a device comprising at least one computer, particularly wherein the device is small enough to hold and operate in the hand and having an operating system capable of running mobile apps - software applications designed to run on mobile devices. A mobile device is therefore a computerized device that is portable and weights particularly less than 500 g. A mobile device is particularly a mobile phone, a smart phone, a smart watch, or a tablet computer that particularly comprises at least one processor, the so-called CPU (central processing unit).

According to another embodiment of the invention, the mobile device, particularly the transmitter and/or receiver comprises means for radio-wave transmission and reception, such as cellular network connectivity for connecting to a mobile network, such as for example GSM (Global System for Mobile Communications), 3G, 4G or 5G, CDMA (Code Division Multiple Access), CDMA2000, UTMS (Universal Mobile Telecommunications System), or LTE (Long Term Evolution).

The mobile device, particularly the transmitter and/or receiver comprises a display screen with a small numeric or alphanumeric keyboard or a touchscreen configured to provide a virtual keyboard and buttons (icons) on-screen. The mobile device is particularly configured to connect to the Internet and interconnect with other computerized devices via Wi-Fi, Bluetooth or near field communication (NFC).

Integrated cameras, digital media players, mobile phone and GPS capabilities are common.

The mobile device is particularly configured to provide a time reference for apps and data, wherein said time reference is provided by a time reference system such as an internal clock or timer of the mobile device or by external signals that are for example received by the internet, the mobile network, or GPS. The time reference can be adjusted for different time zones.

The terms 'processor' or 'computer', or system thereof, are used herein as ordinary context of the art, such as a general purpose processor or a micro-processor, RISC processor, or DSP, possibly comprising additional elements such as memory or communication ports. Optionally or additionally, the terms 'processor' or 'computer' or derivatives thereof denote an apparatus that is capable of carrying out a provided or an incorporated program and/or is capable of controlling and/or accessing data storage apparatus and/or other apparatus such as input and output ports. The terms 'processor' or 'computer' denote also a plurality of processors or computers connected, and/or linked and/or otherwise communicating, possibly sharing one or more other resources such as a memory.

The terms 'software', 'program', 'code' or 'application' or `app' may be used interchangeably according to the context thereof, and denote one or more instructions or directives or circuitry for performing a sequence of operations that generally represent an algorithm and/or other process or method. The program is stored in or on a medium such as RAM, ROM, or disk, or embedded in a circuitry accessible and executable by an apparatus such as a processor or other circuitry.

The processor and program may constitute the same apparatus, at least partially, such as an array of electronic gates, such as FPGA or ASIC, designed to perform a programmed sequence of operations, optionally comprising or linked with a processor or other circuitry.

The term 'configuring' and/or 'adapting' for an objective, or a variation thereof, implies using at least a software and/or electronic circuit and/or auxiliary apparatus designed and/or implemented and/or operable or operative to achieve the objective.

A device storing and/or comprising a program and/or data constitutes an article of manufacture. Unless otherwise specified, the program and/or data are stored in or on a non-transitory medium.

In the context of embodiments of the present disclosure, by way of example and without limiting, terms such as 'operating' or 'executing' imply also capabilities, such as 'operable' or 'executable', respectively.

### Figure Description and examples

Particularly, exemplary embodiments are described below in conjunction with the Figures. The Figures are appended to the claims and are accompanied by text explaining individual features of the shown embodiments and aspects of the present invention. Each individual feature shown in the Figures and/or mentioned in said text of the Figures may be incorporated (also in an isolated fashion) into a claim relating to the device according to the present invention.
Fig. 1 shows a schematic depiction of one embodiment of the method according to the invention highlighting the primary array;
Fig. 2 shows the structure of a subarray;
Fig. 3 shows the transmission process in transmission cycles; and
Fig. 4 shows image reconstruction at the receiver side during prioritized transmission.

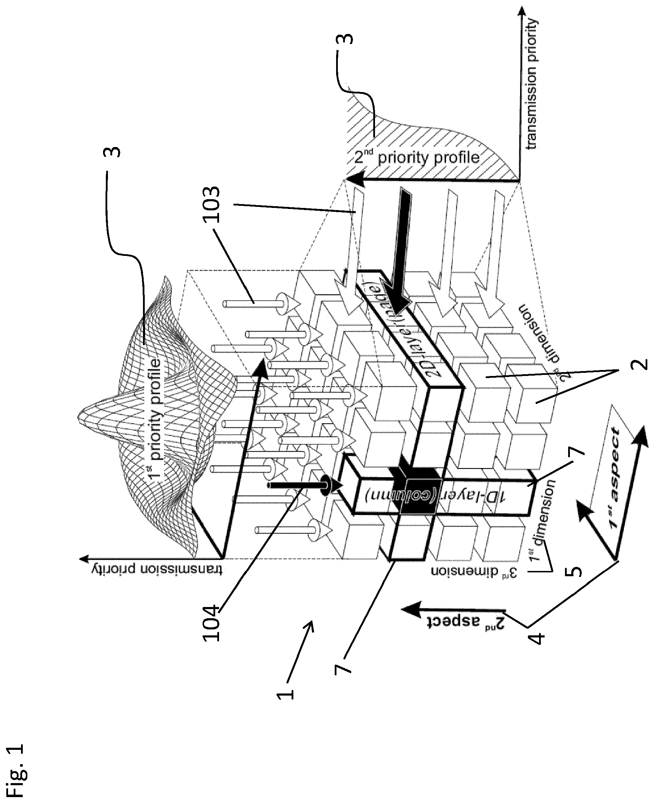

Fig. 1 exemplary illustrates how priority profiles 3, a priority of transmission, the primary array 1 and the subarrays 2 with the array values 101 and the data array are related according to the invention.

The image data of the image or movie to be transmitted are arranged in an *n-*dimensional data array. The data array in the depicted example is six dimensional, therefore *n* = 6. This cannot be illustrated in three-dimensions. Therefore, the data array is not shown in any of the Figures.

According to the invention, the data array is structured such that a plurality of aspects of image information 4 is arranged along the rows, columns and sheets, in the data array.

For a more general terminology of rows, and columns etc. the term "layer" is used. A layer 7 does not necessarily relate to a single dimension of the data array but can relate to more than one dimension.

An aspect of image information 4 for example can be a location of information in the image 100. However, all different kinds of aspects of an image can be understood under the term "aspect of image information". In the following a non-exclusive list is provided for aspects of information:
- A location of information in the image, one, two or three-dimensional;
- A temporal position in a movie;
- A sharpness of the image;
- A color information;

As a general underlying concept of the invention, the inventors divide the data array essentially in aspects of image information 5 which priority of transmission might be adjusted during transmission and some aspects which priority of transmission cannot be adjusted during transmission.

For this purpose the n-dimensional data array is subdivided in a primary array 1 having m-dimensions and subarrays 2 comprising the remaining *d* = *n-m* dimensions of the data array.

In Fig. 1, the data array has been subdivided in a 3-dimensional primary array 1 and 3-dimensional subarrays 2 which comprise the remaining dimensions. Thus, in the example *n*= 6, *m* = 3 and *d* = 3.

The primary array 1 consists of a plurality of subarrays 2 that are the elements of the primary array 1. The subarrays 2 are depicted as cubes that are arranged along the three dimensions 5 of the primary array 1. It is noted that each subarray 2 can be addressed in the primary array 1 in a unique way, for example by way of a subarray index.

The 3-dimensional primary array 1 in this example is of size 4 x 4 x 4.

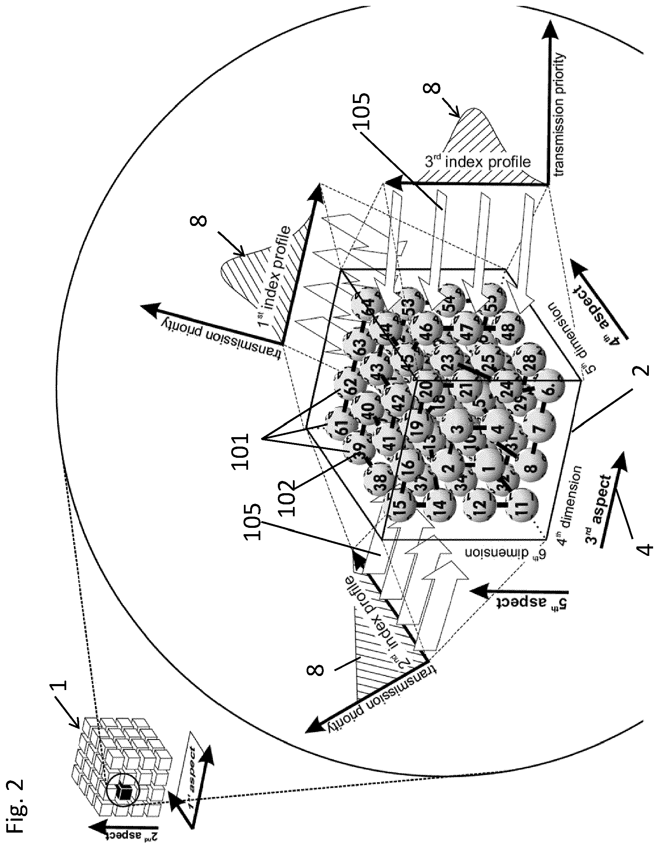

As can be seen in Fig. 2, each subarray 2 has also a size 4 x 4 x 4. It is noted that obviously the size of the subarrays 2 does not have to match the size of the primary array 1 and will not in most applications.

Thus, the size of the data array is 4 x 4 x 4 x 4 x 4 x 4 or it can be at least represented in such a format.

Therefore, the data array consists of 4⁶ array values.

A first aspect of image information 4 arranged along a first and a second dimension 5 of the data array is for example associated to a location, e.g. a block x-coordinate and a block y-coordinate in the image 100, as used for example in JPEG images, wherein a second aspect of image information 5 arranged along a third dimension of the data array is associated to a sub sample number as used in a JPEG images. Herein, a sub sample refers to a full set of 64 spatial frequency coefficients related to a certain color channel in a certain block (MCU, 16x16 pixels). As the JPEG standard features 2:1 oversampling of the luminance color channel compared to the chrominance channels, 6 subsamples belong to each MCU.

The first, second and the third dimensions 5 are now chosen to form the primary array1, wherein the remaining three dimensions are essentially folded into the subarrays 2.

Each aspect of image information 4 in the primary array 1 is associated with a priority profile 3. More precisely, a first priority profile 3 is assigned to the first and the second dimension, wherein said first priority profile 3 is a two-dimensional priority profile. In this case the two-dimensional priority profile 3 is a so-called Mexican hat function that has a pointed maximum in the center.

The maximum is centrally arranged with respect to the primary array 1. At the maximum, the priority values are highest, and therefore, a priority of transmission of the location associated to the layers 7 associated to these high priority values of the first priority profile is highest for subarrays arranged "under" said center. For subarrays 2 arranged at the edges of the first priority profile 3 a lower priority of transmission is achieved.

The first priority profile 3 in this example is thus expressed and depicted as a two-dimensional continuous, non-linear function that is associated to the first aspect of image information 4 namely the location of information in the image 100.

The first priority profile 3 comprises varying priority values that are indicative of the varying transmission priority of the first aspect of image information 4.

The priority profile 3 has the same number of priority values as subarrays it refers to. In this example, the first priority profile 3 has 4 x 4 = 16 priority values. Thus, while in Fig. 1 the priority profiles 3 are depicted non-discrete, it is clear that the person skilled in the art can derive discretized priority values from such a profile, e.g. by sampling the profile accordingly.

The downward pointing arrows 103 indicate the association of the priority values of the first priority profile 3 to the respective layer 7.

The layer 7 to which each priority value of the first priority profile 3 is associated to is one-dimensional and extends "vertically" along the primary array 1, as exemplary indicated by the boxed layer indicated by the black downward-pointing arrow 104.

Subarrays 2 comprised in the same layer are assigned to the same first priority value 1. In the example, each priority value is associated to four subarrays 2.

The second priority profile 3 is a one-dimensional priority profile in form of a one-dimensional function. The second priority profile 3 provides distinction for array elements comprised in the layers 7 defined by the first priority profile 1.

The priority values of the second priority profile 3 address two-dimensional layers 7 in the primary array 1. All subarrays 2 in such a layer 7 addressed by the second priority profile 3 are associated to the same second priority value. Thus, each priority value of the second priority profile 3 is associated to 4 x 4 = 16 subarrays.

For any given subarray 2 in the primary array 1, it is now possible to determine an aggregated priority value, indicative of an associated priority of transmission for the subarray 2.

The aggregated priority values can for example be determined by multiplying priority values from the first and the second priority profile that are associated to the same subarray 2.

In the current example, the subarrays 2 arranged centrally in the upper most layer would have the highest aggregated priority values, i.e. the highest priority of transmission. Information from these subarrays 2 would be transmitted with a comparably high priority of transmission and would thus be completed, i.e. fully transmitted early during image transmission.

The subarrays 2 with the lowest priority of transmission in turn are located in the corners in the lowest layer 7. Information from these subarrays 2 would be transmitted with a comparably low priority of transmission and would thus be completed, i.e. fully transmitted latest during image transmission.

Fig. 2 illustrates the structured data in form of array values 101 that is comprised in each subarray 2. The array values 101 itself might be binary values, integer, or non-integer values.

In the upper left corner of Fig. 2, a coarse representation of the primary array 1 as shown in Fig. 1 is represented. For one selected (indicated as a black cube) in the primary array 1, the subarray 2 is shown in detail.

Each subarray 2 is representative for a set of "sub-dimensions", namely, each subarray 2 consists of array values 101. The array values in each subarray are arranged (or at least could be arranged) in form of an three-dimensional array (not necessarily with the same number of rows and columns as shown in this example) comprising layers with array values 101 associated to at least one more aspect of image information 4, e.g. sharpness, color depth and/or color.

In the example the subarray 2 has the size of 4 x 4 x 4 = 64. The array values 4 are depicted as numbered balls (Having numbers from 1 to 64).

Each subarray 2 is indexed with an index that is identical for all subarrays 2. The index comprises index values 102 that are indicative of an internal priority of transmission of the subarray. The associated index value 102 is depicted as the number on the respective ball. As there are 64 array values 102 to be indexed, the index has 64 index values that in this example range from 1 to 64.

The index provides the internal priority of transmission to each subarray 2, wherein said internal priority of transmission is identical for all subarrays 2, i.e. for example the array value 101 in the lower left corner is associated to the index value 11 in all subarrays 2.

The higher the index value 102 the lower (or higher) the associated priority of transmission for the array values in the subarray.

The index can be predefined e.g. by some common transmission rules, by a bit order in the subarray. Alternatively the index can be defined by means of one or more index profiles 8.

In the example shown, the index is generated by three index profiles 8, wherein each index profile 8 extends along one dimension of the subarray 2.

The index profiles 102 are essentially identical to the priory profiles 3 and can assume the same properties except the index profiles relate to the array values 2 in the subarray 2 and not to the subarrays 2 of the primary array 1.

Technically there is however no significant difference between the index profiles 102 and the priority profiles 3.

For each subarray 2 a layer can be defined to which the index profile 102 is associated (indicated by the arrows 105). Each index profile 8 comprises index profile values. The index value 102 of the index can be for example determined by multiplying all index profile values that relate to the same array value 101.

This way the aspects of image information 4 comprised in the subarray 2 can be addressed independently, here with a first, a second and third index profile. As said previously, the index profiles 8 are identical for all subarrays 2.

Therefore, it is possible to assign to each aspect of image information 4 a transmission profile, wherein upon subdivision into the primary array 1 and subarrays 2 these transmission profiles are the priority profiles 3 or the index profiles 8. While at first glance the definition of subarrays and primary arrays seems unnecessary at this point, it is noted that the differentiation between primary array 1 and subarray 2, and thus between priority profile and index profile become very relevant during transmission of the image.

Having associated the index profiles 8 such that each aspect of image information 4 is addressed by means of a transmission priority, there are several ways of how to proceed in order to transmit the image data to a receiver.

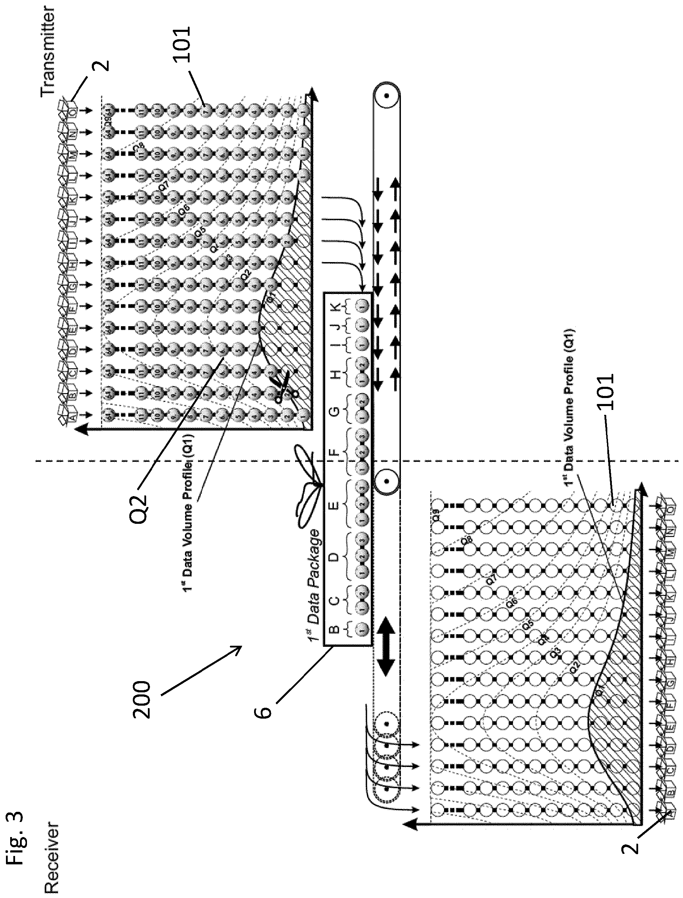

Fig. 3 illustrates the transmission of the image data from the transmitter to a receiver. The transmitter side and the associated method are shown in the upper right panel of Fig. 3, wherein the receiver side and the associated method of image reconstruction are shown in the lower left panel of Fig. 3.

In Fig. 3 the situation is depicted where a first data package 6 comprising array values 101 is transmitted to the receiver.

As the first data package 6, but also the subsequent data packages, comprises a limited amount of information, a choice has to be made as to which array values 101, particularly which bits from the image data are transferred with this first data package 6. Thus, for the first, but also for the subsequent data packages 6, a projected total number of array values can be determined depending on the size of the respective data package. The transmission of a data package defines a transmission cycle.

The content of the first data package 6 is chosen by means of the aggregated priority profile and the indexed array values in each subarray, as will be explained in the following.

For sake of a simplified illustration, the subarrays of Fig. 1 are schematically depicted as postal packages with letters A to O in Fig. 3. Each subarray 2, as stated previously, comprises the same number of array values that are all to be transmitted with the same internal transmission priority, i.e. in the same order, determined by the index. The array values 101 of each subarray 2 are shown as a vertical string of balls numbered from 64 to 1.

Thus, the three-dimensional primary array1 of Fig. 1 is shown in Fig. 3 as linear array, wherein the subarrays are indexed with the letters A to O (obviously there are more subarrays shown in Fig. 1, for the purpose of illustration, not all of them are shown in Fig. 3).

In this linear illustration the first and the second priority profile are aggregated to form the aggregate priority profile, which corresponds in large to the (non-rounded) data volume profile Q1.

The aggregated priority profile has aggregated priority values, wherein each subarray is associated to one of the aggregated priority values (and vice versa).

For explanatory purposes it is assumed that the aggregated priority profile is normalized such that the sum of all aggregated priority values equals one. However, this is not necessary. The sum of the aggregated priority values can essentially yield any number.

From the aggregated priority profile a proportionality factor is determined. Each aggregated priority value is scaled, i.e. multiplied with the proportionality factor, wherein the proportionality factor is chosen such that the sum of all scaled aggregated priority values essentially equals a projected total number of array values to be comprised in the first data package 6.

From the scaled aggregated priority profile a data volume profile Q1 is determined that comprises data volume profile values. The data volume profile Q1 is associated in the same fashion to the subarrays as the aggregated priority profile. For the first transmission cycle the data volume profile values are essentially identical to the scaled aggregated priority values and thus, the data volume profile is identical to the scaled aggregated priority profile.

The data volume profile Q1 for the first data package is depicted as a black solid line having a maximum value for subarray "E" in Fig. 3.

In a next step, for each subarray 2 a number of array values to be comprised in the first data package is determined. The number of array values 101 for each subarray 2 equals the rounded down value of the data volume profile value associated to the subarray 2.

This is schematically depicted by the array values depicted as hollow circles below the data volume profile Q1 for the first data package 6. For example, for subarray "E" the associated data volume profile value might be around 3.5 and for subarray "A" the associated data volume profile value might be 0.9.

Rounding down the associated data volume profile values results in three array values for subarray "E" and zero array values from subarray "A" to be comprised in the first data package.

In a next step, for each subarray 2 a last-selected index value from the index is determined, wherein said last-selected index value corresponds to lowest index value associated to previously transmitted array values for the subarray. In the case of the first data package, the last-selected index value for each subarray is zero, as no array values have been transmitted. In later transmission cycles, the last-selected index value corresponds the rounded-down data profile volume value from the preceding transmission.

In a subsequent step, for each subarray 2 the array values 101 associated to subsequent index values are selected, starting from the last-selected index value, according to the determined number of array values projected to be comprised in the data package.

Thus, for subarray "E" starting from index value zero, the array values associated to the next three index values, namely 1, 2 and 3 are selected to be comprised in the first data package. For subarray "B" the array value associated to the index value one is to be comprised in the first data package.

The first data package is generated having the indicated array values of the respective subarrays.

The first data package therefore can be expressed as *B-1, C-2*, *D-3, E-3, F-3, G-2, H-2, I-1, J-1, K-1,* wherein the letter indicates the number of array values included in the first data package from this subarray.

As long as a unique way of ordering the array values in the data package is applied, reconstruction of the image in the receiver side is possible when the receiver knows said unique order. Therefore, the array values are ordered in the each data package according to a predefined order.

Due to rounding and other factors, the projected data package size might differ from the actual size of the data package.

The first data package 6 is transmitted to the receiver, where at the receiver side essentially the same procedure is performed in the same manner, wherein the received array values are sorted in the respective subarrays 2.

In order for the receiver to be able to determine the correct assignment of the received array values to the subarrays 2, said receiver has knowledge about the priority profile 3, the aggregated priority profile, the index, the number of data packages received, the data package size, and particularly some image header information.

The data volume profile Q1 and/or the data profile values, are stored at least at the transmitter side, particularly also at the receiver.

Alternatively, or additionally, the data amount, i.e. the number of all transmitted array values might be stored. From this number, the data volume profile value for the next transmission cycle can be derived. In case the aggregated priority profile is adjusted, an additional information might be stored about the transmission cycle after which the adjusted priority profile was used for transmission.

Also, the last-selected index values (i.e. the rounded-down data volume profile values) that correspond to the highest index values of the array values for each subarray 2 that have been comprised in the first data package 6 are stored at the transmitter and the receiver. In this example, for subarray "E" the last-selected index value to be stored equals three, wherein for subarray "A" the last-selected index value to be stored equals zero.

For the second data package, in a second transmission cycle, again the projected data package size is determined and thus a number of array values to be comprised in the second data package.

Again, the aggregated priority profile is scaled such that with the proportionality factor that the sum of all aggregated priority values equals the number of array values to be comprised in the second data package.

The data volume profile Q2 is now formed by the sum of the data volume profile Q1 of the preceding transmission cycle and the scaled aggregated priority profile.

Alternatively, the proportionality factor is chosen such that the sum of the aggregated priority profile equals the number of array values of the first data package, i.e. all preceding data packages, and the array values to be comprised in the second data package.

Note the data volume profile values are particularly stored without being rounded down.

The data volume profile Q2 for the second data package is depicted as a dotted line labelled with Q2 at the transmitter and the receiver.

From the difference of the rounded-down data volume profiles of the first and the second transmission cycle the number of array values for each subarray to be comprised in the second data package is determined.

By considering the last-selected index values and the determined number of array values for each subarray, the corresponding array values to be comprised in the second data package are according to the index.

For example, for subarray "E", the array values associated to the index values 4, 5, and 6 would be included in the second data package, and for subarray "A" the array value associated to the index value 1 would be included in the second data package.

This procedure is repeated until either the aggregated priority profile is adjusted or until all array values from one subarray have been transmitted.

If the latter is the case the following steps might be executed.

For example, for the data package 5 in the fifth transmission cycle one can see in Fig. 3 that for subarray "E" all array values have been transmitted already in the fourth transmission cycle.

Now, particularly in an iterative manner, the proportionality factor for the aggregated priority profile can increased such that the difference between data volume profile Q4 of the previous transmission cycle, i.e. the fourth transmission cycle and the data volume profile Q5 of the fifth transmission cycle comprises the projected number of still available array values for the subarrays, i.e. array values that have not been transmitted, which in essence leads to a "saturation" of the data volume profile, such that the data volume profile does not assume values larger than 64 in this case.

Again, the operations are essentially performed identically at the receiver.

At the receiver, particularly each time a data package is received, the image data are updated with the received array values and the image is displayed.

In the following certain aspects are elaborated in a more general way in order to illustrate the general concept behind the illustration provided by the Figures.
1) subarrays 2 do not have to be three-dimensional. But can comprise only a single layer of array values or more than three.
2) the priority profile 3 can be a linear profile, that merely reflects the bit order in a layer, i.e. the priority profile does not need to be explicitly calculated, only a way of providing a sorting order needs to be established.

The way a computer or computer program reflects the primary array 3, the subarrays 2, the index and any other mathematical features of an array, such as the layer and the dimensions can deviate significantly, but it is nonetheless considered to be comprised by the claims of the invention.

One of the advantages of the method according to the invention is that at no point in time a complete indexing or a completely sorted (in terms of transmission priority of the bits) replication of the image data is necessary on the transmitter side.

This allows for a transmission of image data with minimum memory and computational power requirements. The latter specifically becomes important, when the method is to be executed for example on a mobile device, such as a smart phone, a large image (in terms of bit size) is to be transmitted, because sorting of large n-dimensional arrays is computational expensive and requires significant memory.

Another important aspect of the invention is its ability to allow the transmitter, the receiver or both of them to adjust the priority profile and thus the aggregated priority profile.

This is illustrated in the following.

When during transmission of the data array the aggregated priority profile is changed, the selection process of array values in the subarray essentially remain the same.

Assuming after the *i^{th}* data package, i being an integer number, has been transmitted to the receiver the aggregated priority profile is adjusted such that the associated priority values assume different values at least for some subarray of the primary array, then two ways of proceeding with the transmission are possible:
a) The data volume profile for the i+*1* data package is calculated identically as disclosed before, namely by determining the proportionality factor from the (adjusted) aggregated priority profile and adding the data volume profile of the *i^{th}* cycle to the scaled aggregated priority profile values.
   The rounded-down difference between the *i^{th}* and the *i+1* data volume profile yields the number of array values for each subarray to be transmitted in the *i+1* data package, and by resuming the transmission of the array values based on the last-selected index for each subarray determines the specific array values for each subarray to be comprised in the *i+1* data package.
b) From the adjusted priority profile it is assumed that the adjusted aggregated priority profile would have been the underlying aggregated priority profile from the very beginning of the transmission, i.e. for the first data package.

Then, starting at the first transmission cycle, the method determines the data volume profile for the *i+1* transmission cycle based on the adjusted aggregated priority profile with the difference that no data packages are transmitted up to the *i^{th}* transmission cycle. However, the last-selected index values are adjusted during this procedure. One can consider this procedure as a simulation for the adjusted aggregated priority profile.

For the *i+1* transmission cycle it is expected that the adjusted last-selected index value does not match the last array value sent for some subarrays, because the priority profile had been different during the real transmission It could be that the last-selected index value is too high, i.e. some of the array values of the subarray that are associated to a lower index value have not been transmitted. It could also be that the last-selected index value is too low, i.e. some of the array values of the subarray that are associated to a higher index values than the last-selected index value have already been transmitted to the receiver. On average these mismatches should compensate to large extend when all subarrays are considered, i.e. the net amount of mismatches should be close to zero, because the projected date package size had been the same for the "simulation case" with the new priority profiles and the "real transmission case" with the old priority profiles.

This situation can be resolved as follows.

For subarrays where too many array values have been transmitted with respect to the last-selected index value, i.e. the adjusted last-selected index value is smaller than the index value of actually transmitted array values, the adjusted last-selected index value is set to said index value, which might result in a fewer number of array values to be transmitted in a transmission cycle.

For subarrays where too few array values have been transmitted with respect to the last-selected index value, i.e. the adjusted last-selected index value is larger than the index value of actually transmitted array values, the adjusted last-selected index value is set to said index value, which might result in a larger number of array values to be transmitted.

On average the number of array values for said i+1 cycle will be the same. Smaller mismatches can be compensated by some compensation routine known to the expert.

Executing the second alternative b), it might be that transmission of some regions in the image effectively come to halt, wherein others are transmitted with an even higher priority of transmission than indicated by the adjusted aggregated priority profile. However, this behaviour is intended for most applications, as the new priority profiles describe a desired absolute "quality distribution" of the image (which should be reflected by the real transmission status as quickly as possible) rather than a preference on the quality increment rate.

It is noted that it is hardly possible to adjust the index, or the index profiles during transmission, without major readjustment of the method, as adjusting the index essentially "scrambles" the string of array values in each subarray in Fig. 3. To compensate for an adjustment of the index, a considerable amount of additional calculations and comparisons would be required, amounting easily to the same memory storage requirements as traditional methods.

Adjusting any of the at least one priority profile in turn is a task the method according to the invention is specifically laid out, and does not require substantial amount of additional memory or computational resources.

The invention provides several advantages over the prior art, by defining the primary array with the subarrays it becomes possible to reduce memory and data storage requirements as compared to methods that index or sort the whole data array prior to transmission. This is because an index that indexes the whole data array has at least the same size as the image, requiring an equal amount of memory space at the receiver and transmitter side. Moreover, the generation of a sorted data array is a computational expensive and time consuming task.

According to the invention, the index is much smaller than the data array and the same for all subarrays, such that memory requirements are dramatically reduced. Moreover, no sorting and subsequent storing of the data array is performed with the method according to the invention.

Memory storage is only required to store the information about the priority profile(s) and the index, which are minor.

Typically, the subarrays 2 comprise at least an index for a bit order.

Another advantage of the subdivision of the data array into a primary array and the subarrays is that a specification is made regarding aspects of image information that might be subject to a change of transmission priority, i.e. a change of the priority profile and aspects of image information that are not subject to a change of transmission priority; the latter ones being comprised in the subarrays.

The adjustment on the priority profile in turn allows adjusting image transmission to a dynamic situation.

The selection and potential adjustment of the priority profile(s) allows for selecting for image information that a receiver might be most interested in to receive prior to other information.

This becomes particularly interesting in situations where transmission bandwidth between sender, i.e. transmitter and receiver is limited, e.g. in aviation, or in regions with a limited transmission infrastructure.

For example, in case the image is a map comprising the position of the receiver, it might be of great interest to first transmit a region of the image comprising the position of the receiver. However, as the position or a speed of motion of the receiver might change, a shape or a center of said region can be adapted during transmission, which is reflected by adjusting the aggregated priority profile.

Such application is particularly interesting in aviation or road traffic.

Additionally, it might be of great interest to first transmit a region of an image where supposedly a foreground of the image is located. However, while it might be important to receive information from said region of the image in a prioritized fashion it might not be required to first completely transmit all image data relating to said region, e.g. to transmit the full color space and full color depth, but to continuously and gradually supply image information according to the priority profile(s). E.g. while image information is transmitted with high priority for the selected region, a neighbouring region next to the selected region might also receive some image information, but slower, such that information of said neighbouring region can be displayed even though with lower information content than the selected region.

The inventors provide the toolset to facilitate a flexible, continuous and balanced transmission of all aspects in image transmission according to a user's demands.

It is again noted that the priority profiles 3 do not necessarily need to relate to a location in the image 100, but also other aspect of image information can be transmitted with varying priority.

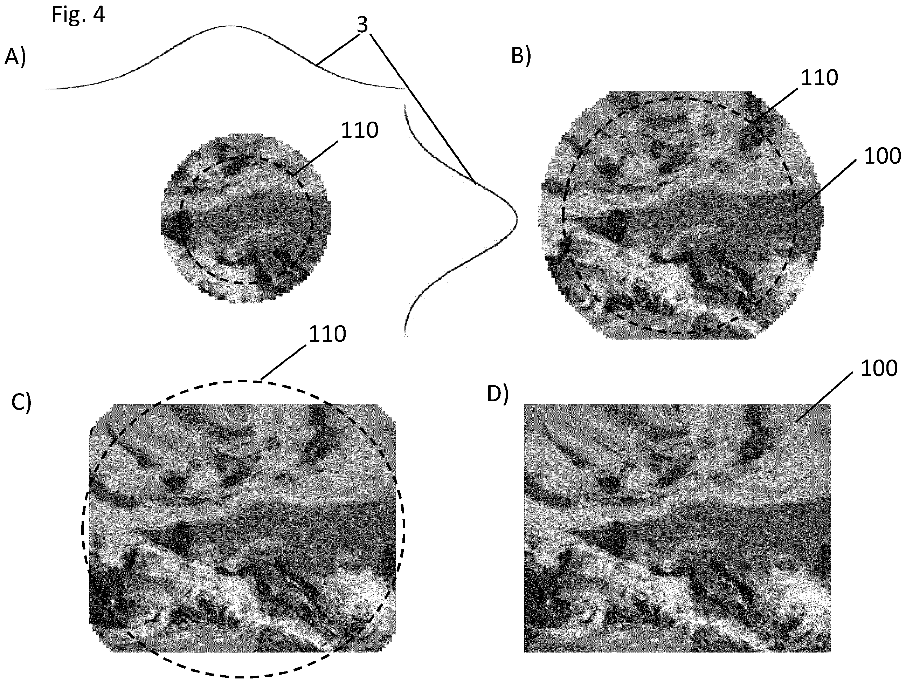

In Fig. 4 an example of the method according to the invention is shown, where the image transmission is having a priority profile having a maximum at the central region of the image, wherein said priority profile 3 decay towards the edges of the image 100.

Therefore, starting at the center the image information is transmitted with higher priority than for the edges. In panel A) of Fig. 4 a first intermediate state during transmission is shown on the receiver side, where in the center the image starts to gain full resolution and color information (indicated by the region enclosed by a circle 110 of dotted lines in the center), wherein concentrically there is some structural information in lower resolution and with no color information available. At the very edges, no image information has been transmitted yet. These regions may remain white (shown) or gray (not shown).

The corresponding priority profiles 3 for the spatial dimensions are schematically shown on top and right to the image of panel A) but apply to all panels. As can be seen, the priority profiles are continuous. It is noted that despite the presentation of Fig. 4 e.g. the transition from the inner region (high resolution and color) to the concentric circle region with lower information content is continuous due to the priority profiles. "Hard" limits of the regions are solely for illustrative purposes, so as to clearly mark the differences of information content in the different regions of the image.

In panel B) and C) of Fig. 4 a second and third intermediate state of image transmission are shown, wherein the central region having high information content, resolution and color, has expanded progressively and the outer regions have also gained some image information.

In panel D) of Fig. 4, the image is transmitted completely with all image information being transmitted to the receiver.

## Claims

1. A computer-implemented method for progressively transmitting an image (100) or a movie from a transmitter, comprising the steps of:
- Acquiring image data representing an at least two-dimensional image (100), wherein the image data is arranged in an n-dimensional data array of a plurality of array values (101), wherein the image data are arranged in the n-dimensional data array such that along each dimension of the data array an aspect of image information is stored, wherein a first aspect of image information that is arranged along a first and a second dimension of the data array is associated to a location in the image (100),
- Selecting m dimensions of the n-dimensional data array to form an m-dimensional primary array (1), wherein the dimensions of the data array relating to the location of image information in the image (100) are selected to be comprised in the primary array (1), wherein said primary array (1) comprises subarrays (2), wherein each subarray (2) comprises some of the array values (101) of the data array, wherein said some of array values (101) extend in the remaining d dimensions of the data array, wherein *d = n* - *m,* such that each element of the primary array (1) consists of one subarray (2) within which the remaining *d = n* - *m* dimensions are stored, such that each dimension of the data array extends either in the primary array (1) or in the subarray (2), wherein the size of the respective dimension remains the same, wherein dimensions of the data array relating to a bit depth are selected to be comprised in the subarray (2), wherein the array values (101) of the subarrays (2) are indexed with an index, wherein said index is the same for all subarrays (2),
- Selecting a plurality of varying priority profiles (3) comprising a plurality of varying priority values,
- Associating each priority profile (3) to at least one dimension of the primary array (1), wherein each priority profile (3) confers a varying priority of transmission to the subarrays (2) arranged along the associated dimension(s) of the primary array (1),
- Merging the one or more selected priority profiles (3) to a single aggregated priority profile having aggregated priority values, such that each subarray (2) is associated to one of the aggregated priority values, wherein said aggregated priority profile is expressed as a function and is continuous, wherein from the aggregated priority values together with the index, the priority of transmission for each array value is determined,
- Transmitting (200) the plurality of array values (101) from the transmitter according to the priority of transmission and according to the index associated to the array value (101) for reconstructing a received image with the transmitted array values (101), the priority profiles (3) and/or the aggregated priority profile, and the index.

2. The computer-implemented method according to claim 1, wherein the aggregated priority value is determined by way of a cascading aggregation, particularly a cascading multiplication of the priority values of a first priority profile of the one or more priority profiles and the priority values of at least a second priority profile of the one or more priority profiles (3) particularly wherein said aggregated priority profile is non-linear and/or has a local extremum.

3. The computer-implemented method according to any of the preceding claims, wherein for a current transmission cycle of the transmission, a data package (6) to be transmitted with a projected data package size is generated by the steps of:
a) determining from the projected data package size a projected total number of array values (101) to be transmitted in the current transmission cycle to a receiver,
b) scaling the aggregated priority profile with a proportionality factor, such as to obtain a scaled aggregated priority profile comprising scaled aggregated priority values, wherein a sum of all scaled aggregated priority values essentially equals the projected total number of array values (101) to be transmitted in the current transmission cycle,
c) determining a data volume profile (Q1) with data volume profile values for the current transmission cycle, wherein the data volume profile (Q1) is determined from a sum of the scaled aggregated priority profile for the current transmission cycle and the scaled aggregated priority profiles of preceding transmission cycles,
d) selecting for each subarray (2), the array values (101) associated to index values (102) of the index that are between the data volume profile value of the data volume profile of the preceding transmission cycle and the data volume profile value of the data volume profile of the current transmission cycle,
e) generating the data package (6) to be transmitted comprising the selected array values (101),
f) storing the scaled aggregated priority profile for the current cycle, and/or the data volume profile ((Q1) for the current transmission cycle,
g) transmitting (200) the data package (6) for the current transmission cycle.

4. The computer-implemented method according to claim 3, wherein the number of array values (101) taken from a subarray (2) projected to be comprised in the data package of the current transmission cycle is adjusted to
- zero, if all array values (101) of the subarray (2) have been transmitted or particularly if the data volume profile value of the current transmission cycle is smaller than the data volume profile value of the preceding cycle for the subarray (2),
- to a remainder of array values (10) in the subarray (2), if the data volume profile value of the subarray exceeds the number of index values.

5. The computer implemented method according to claim 3 or 4, wherein a deviation of the data package size of the generated data package (6) from the projected data package size is determined, wherein if the deviation is larger than a predefined threshold value, steps b) to f) of claim 4 are repeated with an adjusted proportionality factor, until the deviation is lower than the predefined threshold value.

6. The computer-implemented method according to any of the preceding claims, wherein the at least one priority profile varies non-linearly along the at least one dimension it is associated to, particularly wherein said priority profile comprises priority values that vary non-linearly along said dimension.

7. The computer-implemented method according to any of the preceding claims, wherein at least one of the plurality of priority profiles (3) varies continuously along the at least one dimension it is associated to, particularly wherein said priority profile (3) comprises priority values that vary continuously along said dimension.

8. The computer-implemented method according to any of the preceding claims, wherein at least one priority profile (3) exhibits a local extremum, particularly wherein said priority profile (3) comprises priority values that exhibit a local extremum.

9. The computer-implemented method according to any of the preceding claims, wherein the acquired image data comprises at least a 5-dimensional data array, particularly wherein the image data is stored in an JPEG format, wherein
- a first dimension of the data array relates to a block-x coordinate,
- a second dimension of the data array relates to a block-y-coordinate,
- a third dimension of the data array relates to a subsample number,
- a fourth dimension of the data array relates to spatial frequency coefficients, particularly wherein there are 64 frequency coefficients,
- a fifth dimension of the data array relates to a bit depth of each frequency coefficient, particularly wherein the bit depth is 16 bits for each frequency coefficient, wherein the primary array (1) comprises the first, the second and the third dimension and wherein each subarray comprises the fourth, and fifth dimension, wherein a first priority profile is a two-dimensional priority profile associated to the first and the second dimension and wherein a second priority profile is associated to the third dimension, wherein the index indexes the array values of the fourth and the fifth dimension comprised in each subarray, particularly wherein the frequency coefficients are transmitted according to JPEG standard that defines the order transmission for the frequency coefficients, wherein the index is indexing the array values such that the frequency coefficients are transmitted sequentially, particularly such that all bits of a frequency coefficient are transmitted before a next frequency coefficient is transmitted.

10. The computer-implemented method according to any of the preceding claims, wherein a receiver selects or adjusts at least one of the priority profiles and transmits information comprising the priority profiles to the transmitter and/or wherein the transmitter selects or adjusts at least one of the priority profiles and transmits information comprising the priority profiles to a receiver.

11. The computer-implemented method according to claim 10, wherein the receiver is arranged in a vehicle and the image is a map, particularly a weather map comprising the position of the vehicle, such as an aircraft, car or ship, wherein the priority profiles form a two-dimensional priority profile prioritizing the transmission of image data related to the location in the image, wherein the priority of transmission is highest, particularly has a local maximum at the position of the vehicle on the image, such that the adjacent information is transmitted with highest priority and information further away from the position of the vehicle in the image is transmitted with lower priority.

12. The computer-implemented method according to any of the preceding claims, wherein the index is determined from at least one index profile (8) particularly by means of a bit order of the subarray (2), or by a randomly selected order.

13. A computer-implemented method for progressively reconstructing an image or a movie at a receiver comprises the steps of:
- Providing an index comprising a plurality of index values (102) to the receiver,
- Providing one or more priority profiles (3) or an aggregated priority profile to the receiver, wherein an aggregated priority profile is received from a transmitter and/or stored at the receiver, wherein said aggregated priority profile is expressed as a function and is continuous,
- Receiving information about image data representing at least a two-dimensional image (100),
- Generating at the receiver an n-dimensional data array of array values to be received for the image data, wherein the image data are arranged such in the *n-*dimensional data array that along each dimension of the data array an aspect of image information is stored, wherein a first aspect of image information that is arranged along a first and a second dimension of the data array is associated to a location in the image (100),
- Determining m dimensions of the n-dimensional data array to form an m-dimensional primary array (1), wherein said primary array (1) comprises subarrays(2), wherein each subarray (2) comprises the array values (101) to be received of the data array and wherein the array values (101) extend in the remaining d dimensions of the data array, wherein *d* = *n - m*, such that each element of the primary array (1) consists of one subarray (2) within which the remaining *d = n* - m dimensions are stored, such that each dimension of the data array extends either in the primary array (1) or in the subarray (2), wherein the size of the respective dimension remains the same, wherein dimensions of the data array relating to a bit depth are selected to be comprised in the subarray (2), wherein the array values (101) to be received of the subarrays (2) are indexed with the index, wherein said index is the same for all subarrays, wherein the determination of the primary array (1) and the subarrays (2) is based on the index and the aggregated priority profile,
- Associating the aggregated priority profile to the corresponding dimensions of the primary array (1), wherein the aggregated priority profile confers a varying priority of transmission to the subarrays (2) arranged along the associated dimension(s) of the primary array (1),
- Receiving array values (101) from a transmitter particularly according to the priority of transmission and particularly according to the index associated to the array value for reconstructing a received image with the received array values,
- Each time array values are received at the receiver or in predefined time intervals reconstructing a received image with the received array values, the at least one priority profile, and the index, such that image data associated to array values having a higher priority of transmission can be displayed first at the receiver.

14. A computer program, wherein the computer-program comprises computer program code that when executed on a computer, executes the computer-implemented method according to one of the claims 1 to 12 and/or claim 13.

15. A system, wherein said system comprises
- a transmitter configured to execute the steps of the computer-implemented method according to one of the claims 1 to 12 and/or the computer program according to claim 14 that are/is to be executed at the transmitter, and
- at least one receiver configured to execute the steps of the computer-implemented method according to claim 13 and/or the computer program according to claim 14 that are/is to be executed at the receiver.

## Patentansprüche

1. Ein computer-implementiertes Verfahren zum progressiven Übertragen eines Bildes (100) oder eines Films von einem Sender, das die folgenden Schritte umfasst:
- Erfassen von Bilddaten, die ein mindestens zweidimensionales Bild (100) darstellen, wobei die Bilddaten in einem n-dimensionalen Datenarray aus einer Vielzahl von Arraywerten (101) angeordnet sind, wobei die Bilddaten in dem *n-*dimensionalen Datenarray so angeordnet sind, dass entlang jeder Dimension des Datenarrays ein Aspekt von Bildinformationen gespeichert ist, wobei ein erster Aspekt von Bildinformationen, der entlang einer ersten und einer zweiten Dimension des Datenarrays angeordnet ist, mit einer Position in dem Bild (100) verknüpft ist,
- Auswählen von m Dimensionen des n-dimensionalen Datenarrays, um ein m-dimensionales Primärarray (1) zu bilden, wobei die Dimensionen des Datenarrays, die sich auf die Position der Bildinformationen im Bild (100) beziehen, so ausgewählt werden, dass sie im Primärarray (1) enthalten sind, wobei das Primärarray (1) Subarrays (2) umfasst, wobei jedes Subarray (2) einige der Arraywerte (101) des Datenarrays umfasst, wobei sich besagte einige Arraywerte (101) in den verbleibenden d Dimensionen des Datenarrays erstrecken, wobei *d* = *n* - *m*, so dass jedes Element des Primärarrays (1) aus einem Subarray (2) besteht, in dem die verbleibenden *d* = *n* - *m* Dimensionen gespeichert sind, so dass sich jede Dimension des Datenarrays entweder im Primärarray (1) oder in dem Subarray (2) erstreckt, wobei die Größe der jeweiligen Dimension gleich bleibt, wobei Dimensionen des Datenarrays, die sich auf eine Bittiefe beziehen, so ausgewählt werden, dass sie in dem Subarray (2) enthalten sind, wobei die Arraywerte (101) der Subarrays (2) mit einem Index indiziert werden, wobei der Index für alle Subarrays (2) gleich ist,
- Auswählen einer Vielzahl von unterschiedlichen Prioritätsprofilen (3), die eine Vielzahl von unterschiedlichen Prioritätswerten umfassen,
- Zuordnen jedes Prioritätsprofils (3) zu mindestens einer Dimension des Primärarrays (1), wobei jedes Prioritätsprofil (3) eine unterschiedliche Übertragungspriorität auf die Subarrays (2) überträgt, die entlang der zugeordneten Dimension(en) des Primärarrays (1) angeordnet sind
- Zusammenführen des einen oder der mehreren ausgewählten Prioritätsprofile(n/s) (3) zu einem einzigen aggregierten Prioritätsprofil mit aggregierten Prioritätswerten, so dass jedes Subarray (2) einem der aggregierten Prioritätswerte zugeordnet ist, wobei das aggregierte Prioritätsprofil als eine Funktion ausgedrückt ist und stetig ist, wobei aus den aggregierten Prioritätswerten zusammen mit dem Index die Übertragungspriorität für jeden Arraywert bestimmt wird,
- Übertragen (200) der Vielzahl von Arraywerten (101) von dem Sender gemäß der Übertragungspriorität und gemäß dem dem Arraywert (101) zugeordneten Index zum Rekonstruieren eines empfangenen Bildes mit den übertragenen Arraywerten (101), den Prioritätsprofilen (3) und/oder dem aggregierten Prioritätsprofil und dem Index.

2. Das computer-implementierte Verfahren gemäß Anspruch 1, wobei der aggregierte Prioritätswert durch eine kaskadierende Aggregation, insbesondere eine kaskadierende Multiplikation der Prioritätswerte eines ersten Prioritätsprofils des einen oder der mehreren Prioritätsprofile und der Prioritätswerte mindestens eines zweiten Prioritätsprofils des einen oder der mehreren Prioritätsprofile (3) bestimmt wird, wobei insbesondere das aggregierte Prioritätsprofil nichtlinear ist und/oder ein lokales Extremum aufweist.

3. Das computer-implementierte Verfahren gemäß einem der vorstehenden Ansprüche, wobei für einen aktuellen Übertragungszyklus der Übertragung ein zu übertragendes Datenpaket (6) mit einer projizierten Datenpaketgröße durch die folgenden Schritte erzeugt wird:
a) Bestimmen einer projizierten Gesamtzahl von Arraywerten (101), die in dem aktuellen Übertragungszyklus an einen Empfänger zu übertragen sind, aus der projizierten Datenpaketgröße,
b) Skalieren des aggregierten Prioritätsprofils mit einem Proportionalitätsfaktor, um ein skaliertes aggregiertes Prioritätsprofil zu erhalten, das skalierte aggregierte Prioritätswerte umfasst, wobei eine Summe aller skalierten aggregierten Prioritätswerte im Wesentlichen gleich der projizierten Gesamtzahl von Arraywerten (101) ist, die in dem aktuellen Übertragungszyklus zu übertragen sind,
c) Bestimmen eines Datenvolumenprofils (Q1) mit Datenvolumenprofilwerten für den aktuellen Übertragungszyklus, wobei das Datenvolumenprofil (Q1) aus einer Summe des skalierten aggregierten Prioritätsprofils für den aktuellen Übertragungszyklus und der skalierten aggregierten Prioritätsprofile vorhergehender Übertragungszyklen bestimmt wird,
d) Auswählen für jedes Subarray (2) der Arraywerte (101), die mit Indexwerten (102) des Index assoziiert sind, die zwischen dem Datenvolumenprofilwert des Datenvolumenprofils des vorhergehenden Übertragungszyklus und dem Datenvolumenprofilwert des Datenvolumenprofils des aktuellen Übertragungszyklus liegen,
e) Erzeugen des zu übertragenden Datenpakets (6), das die ausgewählten Arraywerte (101) umfasst,
f) Speichern des skalierten aggregierten Prioritätsprofils für den aktuellen Zyklus und/oder des Datenvolumenprofils (Q1) für den aktuellen Übertragungszyklus,
g) Übertragen (200) des Datenpakets (6) für den aktuellen Übertragungszyklus.

4. Das computer-implementierte Verfahren gemäß Anspruch 3, wobei die Anzahl der Arraywerte (101), die aus einem Subarray (2) entnommen werden, das voraussichtlich im Datenpaket des aktuellen Übertragungszyklus enthalten ist, auf
- auf Null eingestellt wird, wenn alle Arraywerte (101) des Subarrays (2) übertragen wurden oder insbesondere wenn der Datenvolumenprofilwert des aktuellen Übertragungszyklus kleiner ist als der Datenvolumenprofilwert des vorhergehenden Zyklus für das Subarray (2),
- auf einen Rest von Arraywerten (10) im Subarray (2) eingestellt wird, wenn der Datenvolumenprofilwert des Subarrays die Anzahl der Indexwerte überschreitet.

5. Das computer-implementierte Verfahren gemäß Anspruch 3 oder 4, wobei eine Abweichung der Datenpaketgröße des erzeugten Datenpakets (6) von der projizierten Datenpaketgröße bestimmt wird, wobei, wenn die Abweichung größer als ein vordefinierter Schwellenwert ist, die Schritte b) bis f) von Anspruch 4 mit einem angepassten Proportionalitätsfaktor wiederholt werden, bis die Abweichung kleiner als der vordefinierte Schwellenwert ist.

6. Das computer-implementierte Verfahren gemäß einem der vorhergehenden Ansprüche, wobei das mindestens eine Prioritätsprofil entlang der mindestens einen Dimension, der es zugeordnet ist, nichtlinear variiert, insbesondere wobei das Prioritätsprofil Prioritätswerte umfasst, die entlang der Dimension nichtlinear variieren.

7. Das computer-implementierte Verfahren gemäß einem der vorstehenden Ansprüche, wobei mindestens eines der Vielzahl von Prioritätsprofilen (3) stetig entlang der mindestens einen Dimension variiert, der es zugeordnet ist, insbesondere wobei das Prioritätsprofil (3) Prioritätswerte umfasst, die stetig entlang der Dimension variieren.

8. Das computer-implementierte Verfahren gemäß einem der vorstehenden Ansprüche, wobei mindestens ein Prioritätsprofil (3) ein lokales Extremum aufweist, insbesondere wobei das Prioritätsprofil (3) Prioritätswerte umfasst, die ein lokales Extremum aufweisen.

9. Das computer-implementierte Verfahren gemäß einem der vorstehenden Ansprüche, wobei die erfassten Bilddaten mindestens ein fünfdimensionales Datenarray umfassen, insbesondere wobei die Bilddaten in einem JPEG-Format gespeichert sind, wobei
- eine erste Dimension des Datenarrays sich auf eine Block-x-Koordinate bezieht,
- eine zweite Dimension des Datenarrays sich auf eine Block-y-Koordinate bezieht,
- eine dritte Dimension des Datenarrays sich auf eine Subsample-Zahl bezieht,
- eine vierte Dimension des Datenarrays sich auf räumliche Frequenzkoeffizienten bezieht, insbesondere wobei es 64 Frequenzkoeffizienten gibt,
- eine fünfte Dimension des Datenarrays sich auf eine Bittiefe jedes Frequenzkoeffizienten bezieht, insbesondere wobei die Bittiefe 16 Bit für jeden Frequenzkoeffizienten beträgt,
wobei das Primärarray (1) die erste, die zweite und die dritte Dimension umfasst und wobei jedes Subarray die vierte und die fünfte Dimension umfasst, wobei ein erstes Prioritätsprofil ein zweidimensionales Prioritätsprofil ist, das mit der ersten und der zweiten Dimension verknüpft ist, und wobei ein zweites Prioritätsprofil mit der dritten Dimension verknüpft ist, wobei der Index die Arraywerte der vierten und fünften Dimension, die in jedem Subarray enthalten sind, indiziert, insbesondere wobei die Frequenzkoeffizienten gemäß dem JPEG-Standard übertragen werden, der die Übertragungsreihenfolge für die Frequenzkoeffizienten definiert, wobei der Index die Arraywerte so indiziert, dass die Frequenzkoeffizienten sequentiell übertragen werden, insbesondere so, dass alle Bits eines Frequenzkoeffizienten übertragen werden, bevor ein nächster Frequenzkoeffizient übertragen wird.

10. Das computer-implementierte Verfahren gemäß einem der vorhergehenden Ansprüche, wobei ein Empfänger mindestens eines der Prioritätsprofile auswählt oder anpasst und die Prioritätsprofile umfassende Informationen an den Sender überträgt und/oder wobei der Sender mindestens eines der Prioritätsprofile auswählt oder anpasst und die Prioritätsprofile umfassende Informationen an einen Empfänger überträgt.

11. Das computer-implementierte Verfahren gemäß Anspruch 10, wobei der Empfänger in einem Fahrzeug angeordnet ist und das Bild eine Karte ist, insbesondere eine Wetterkarte, die die Position des Fahrzeugs umfasst, wie z. B. ein Flugzeug, ein Auto oder ein Schiff, wobei die Prioritätsprofile ein zweidimensionales Prioritätsprofil bilden, das die Übertragung von Bilddaten, die sich auf den Ort im Bild beziehen, bilden, wobei die Übertragungspriorität am höchsten ist, insbesondere ein lokales Maximum an der Position des Fahrzeugs auf dem Bild aufweist, so dass die benachbarte Information mit höchster Priorität übertragen wird und die Information, die weiter von der Position des Fahrzeugs im Bild entfernt ist, mit niedrigerer Priorität übertragen wird.

12. Das computer-implementierte Verfahren gemäß einem der vorstehenden Ansprüche, wobei der Index aus mindestens einem Indexprofil (8) bestimmt wird, insbesondere mittels einer Bit-Reihenfolge des Subarrays (2) oder durch eine zufällig ausgewählte Reihenfolge.

13. Das computer-implementierte Verfahren zur progressiven Rekonstruktion eines Bildes oder eines Films an einem Empfänger umfasst die folgenden Schritte:
- Bereitstellen eines Index, der eine Vielzahl von Indexwerten (102) umfasst, für den Empfänger,
- Bereitstellen eines oder mehrerer Prioritätsprofile (3) oder eines aggregierten Prioritätsprofils für den Empfänger, wobei ein aggregiertes Prioritätsprofil von einem Sender empfangen und/oder bei dem Empfänger gespeichert wird, wobei das aggregierte Prioritätsprofil als eine Funktion ausgedrückt wird und stetig ist,
- Empfangen von Informationen über Bilddaten, die mindestens ein zweidimensionales Bild (100) darstellen,
- Erzeugen eines *n*-dimensionalen Datenarrays von Arraywerten, die für die Bilddaten empfangen werden sollen, am Empfänger, wobei die Bilddaten in dem *n*-dimensionalen Datenarray so angeordnet sind, dass entlang jeder Dimension des Datenarrays ein Aspekt von Bildinformationen gespeichert wird, wobei ein erster Aspekt von Bildinformationen, der entlang einer ersten und einer zweiten Dimension des Datenarrays angeordnet ist, mit einer Position in dem Bild (100) verknüpft ist,
- Bestimmen von *m* Dimensionen des *n*-dimensionalen Datenarrays, um ein *m-*dimensionales Primärarray (1) zu bilden, wobei das Primärarray (1) Subarrays (2) umfasst, wobei jedes Subarray (2) die zu empfangenden Arraywerte (101) des Datenarrays umfasst und wobei sich die Arraywerte (101) in den verbleibenden *d* Dimensionen des Datenarrays erstrecken, wobei *d* = *n* - *m,* so dass jedes Element des Primärarrays (1) aus einem Subarray (2) besteht, in dem die verbleibenden *d* = *n* - *m* Dimensionen gespeichert sind, so dass sich jede Dimension des Datenarrays entweder im Primärarray (1) oder im Subarray (2) erstreckt, wobei die Größe der jeweiligen Dimension gleich bleibt, wobei Dimensionen des Datenarrays, die sich auf eine Bittiefe betreffen, so ausgewählt werden, dass sie in dem Subarray (2) enthalten sind, wobei die zu empfangenden Arraywerte (101) der Subarrays (2) mit dem Index indiziert werden, wobei der Index für alle Subarrays gleich ist, wobei die Bestimmung des Primärarrays (1) und der Subarrays (2) auf dem Index und dem aggregierten Prioritätsprofil basiert,
- Zuordnen des aggregierten Prioritätsprofils zu den entsprechenden Dimensionen des Primärarrays (1), wobei das aggregierte Prioritätsprofil den Subarrays (2), die entlang der zugeordneten Dimension(en) des Primärarrays (1) angeordnet sind, eine unterschiedliche Übertragungspriorität verleiht,
- Empfangen von Arraywerten (101) von einem Sender, insbesondere gemäß der Übertragungspriorität und insbesondere gemäß dem dem Arraywert zugeordneten Index, zum Rekonstruieren eines empfangenen Bildes mit den empfangenen Arraywerten,
- jedes Mal, wenn Arraywerte am Empfänger oder in vordefinierten Zeitintervallen empfangen werden, Rekonstruieren eines empfangenen Bildes mit den empfangenen Arraywerten, dem mindestens einen Prioritätsprofil und dem Index, so dass Bilddaten, die Arraywerten mit einer höheren Übertragungspriorität zugeordnet sind, zuerst am Empfänger angezeigt werden können.

14. Ein Computerprogramm, wobei das Computerprogramm Computerprogrammcode umfasst, der bei Ausführung auf einem Computer das computer-implementierte Verfahren gemäß einem der Ansprüche 1 bis 12 und/oder Anspruch 13 ausführt.

15. Ein System, wobei das System umfasst
- einen Sender, der so konfiguriert ist, dass er die Schritte des computer-implementierten Verfahrens gemäß einem der Ansprüche 1 bis 12 und/oder des Computerprogramms gemäß Anspruch 14 ausführt, die am Sender auszuführen sind, und
- mindestens einen Empfänger, der so konfiguriert ist, dass er die Schritte des computer-implementierten Verfahrens gemäß Anspruch 13 und/oder des Computerprogramms gemäß Anspruch 14 ausführt, die am Empfänger auszuführen sind.

## Revendications

1. Procédé mis en oeuvre par ordinateur pour transmettre progressivement une image (100) ou un film depuis un émetteur, comprenant les étapes consistant à :
- acquérir des données d'image représentant une image au moins bidimensionnelle (100), dans lequel les données d'image sont agencées en un tableau de données n-dimensionnel d'une pluralité de valeurs de tableau (101), dans lequel les données d'image sont agencées dans le tableau de données n-dimensionnel de sorte que le long de chaque dimension du tableau de données, un aspect d'informations d'image est stocké, dans lequel un premier aspect d'informations d'image qui est agencé le long d'une première et d'une seconde dimension du tableau de données est associé à un emplacement dans l'image (100),
- sélectionner m dimensions du tableau de données n-dimensionnel pour former un tableau primaire m-dimensionnel (1), dans lequel les dimensions du tableau de données concernant l'emplacement d'informations d'image dans l'image (100) sont sélectionnées pour être comprises dans le tableau primaire (1), dans lequel ledit tableau primaire (1) comprend des tableaux secondaires (2), dans lequel chaque tableau secondaire (2) comprend certaines des valeurs de tableau (101) du tableau de données, dans lequel lesdites certaines des valeurs de tableau (101) s'étendent dans les d dimensions restantes du tableau de données, dans lequel d = n - m, de sorte que chaque élément du tableau primaire (1) est constitué d'un tableau secondaire (2) au sein duquel les d = n - m dimensions restantes sont stockées, de sorte que chaque dimension du tableau de données s'étend soit dans le tableau primaire (1), soit dans le tableau secondaire (2), dans lequel la taille de la dimension respective reste la même, dans lequel des dimensions du tableau de données concernant une profondeur de bit sont sélectionnées pour être comprises dans le tableau secondaire (2), dans lequel les valeurs de tableau (101) des tableaux secondaires (2) sont indexées avec un indice, dans lequel ledit indice est le même pour tous les tableaux secondaires (2),
- sélectionner une pluralité de profils de priorité variables (3) comprenant une pluralité de valeurs de priorité variables,
- associer chaque profil de priorité (3) à au moins une dimension du tableau primaire (1), dans lequel chaque profil de priorité (3) confère une priorité variable de transmission aux tableaux secondaires (2) agencés le long de la/des dimension(s) associée(s) du tableau primaire (1),
- fusionner le ou les profils de priorité sélectionnés (3) en un seul profil de priorité agrégé ayant des valeurs de priorité agrégées de sorte que chaque tableau secondaire (2) est associé à une des valeurs de priorité agrégées, dans lequel ledit profil de priorité agrégé est exprimé en tant que fonction et est continu, dans lequel la priorité de transmission pour chaque valeur de tableau est déterminée à partir des valeurs de priorité agrégées conjointement à l'indice,
- transmettre (200) la pluralité de valeurs de tableau (101) depuis l'émetteur en fonction de la priorité de transmission et en fonction de l'indice associé à la valeur de tableau (101) pour reconstruire une image reçue avec les valeurs de tableau transmises (101), les profils de priorité (3) et/ou le profil de priorité agrégé, et l'indice.

2. Procédé mis en oeuvre par ordinateur selon la revendication 1, dans lequel la valeur de priorité agrégée est déterminée au moyen d'une agrégation en cascade, notamment d'une multiplication en cascade, des valeurs de priorité d'un premier profil de priorité du ou des profils de priorité et des valeurs de priorité d'au moins un second profil de priorité du ou des profils de priorité (3), notamment dans lequel ledit profil de priorité agrégé est non linéaire et/ou a un extrémum local.

3. Procédé mis en oeuvre par ordinateur selon l'une quelconque des revendications précédentes, dans lequel pour un cycle de transmission actuel de la transmission, un paquet de données (6) devant être transmis avec une taille de paquet de données projetée est généré par les étapes consistant à :
a) déterminer à partir de la taille de paquet de données projetée un nombre total projeté de valeurs de tableau (101) devant être transmises dans le cycle de transmission actuel à un récepteur,
b) mettre à l'échelle le profil de priorité agrégé avec un facteur de proportionnalité de manière à obtenir un profil de priorité agrégé mis à l'échelle comprenant des valeurs de priorité agrégées mises à l'échelle, dans lequel une somme de toutes les valeurs de priorité agrégées mises à l'échelle est essentiellement égale au nombre total projeté de valeurs de tableau (101) devant être transmises dans le cycle de transmission actuel,
c) déterminer un profil de volume de données (Q1) avec des valeurs de profil de volume de données pour le cycle de transmission actuel, dans lequel le profil de volume de données (Q1) est déterminé à partir d'une somme du profil de priorité agrégé mis à l'échelle pour le cycle de transmission actuel et des profils de priorité agrégés mis à l'échelle de cycles de transmission précédents,
d) sélectionner pour chaque tableau secondaire (2) les valeurs de tableau (101) associées à des valeurs d'indice (102) de l'indice qui sont entre la valeur de profil de volume de données du profil de volume de données du cycle de transmission précédent et la valeur de profil de volume de données du profil de volume de données du cycle de transmission actuel,
e) générer le paquet de données (6) devant être transmis comprenant les valeurs de tableau sélectionnées (101),
f) stocker le profil de priorité agrégé mis à l'échelle pour le cycle actuel et/ou le profil de volume de données (Q1) pour le cycle de transmission actuel,
g) transmettre (200) le paquet de données (6) pour le cycle de transmission actuel.

4. Procédé mis en oeuvre par ordinateur selon la revendication 3, dans lequel le nombre de valeurs de tableau (101) prélevées d'un tableau secondaire (2) projetées pour être comprises dans le paquet de données du cycle de transmission actuel est ajusté à
- zéro si toutes les valeurs de tableau (101) du tableau secondaire (2) ont été transmises ou notamment si la valeur de profil de volume de données du cycle de transmission actuel est inférieure à la valeur de profil de volume de données du cycle précédent pour le tableau secondaire (2),
- à un reste de valeurs de tableau (10) dans le tableau secondaire (2) si la valeur de profil de volume de données du tableau secondaire dépasse le nombre de valeurs d'indice.

5. Procédé mis en oeuvre par ordinateur selon la revendication 3 ou 4, dans lequel un écart de la taille de paquet de données du paquet de données généré (6) par rapport à la taille de paquet de données projetée est déterminé, dans lequel si l'écart est supérieur à une valeur seuil prédéfinie, les étapes b) à f) de la revendication 4 sont répétées avec un facteur de proportionnalité ajusté jusqu'à ce que l'écart soit inférieur à la valeur seuil prédéfinie.

6. Procédé mis en oeuvre par ordinateur selon l'une quelconque des revendications précédentes, dans lequel l'au moins un profil de priorité varie non linéairement le long de l'au moins une dimension à laquelle il est associé, notamment dans lequel ledit profil de priorité comprend des valeurs de priorité qui varient non linéairement le long de ladite dimension.

7. Procédé mis en oeuvre par ordinateur selon l'une quelconque des revendications précédentes, dans lequel au moins un de la pluralité de profils de priorité (3) varie en continu le long de l'au moins une dimension à laquelle il est associé, notamment dans lequel ledit profil de priorité (3) comprend des valeurs de priorité qui varient en continu le long de ladite dimension.

8. Procédé mis en oeuvre par ordinateur selon l'une quelconque des revendications précédentes, dans lequel au moins un profil de priorité (3) présente un extrémum local, notamment dans lequel ledit profil de priorité (3) comprend des valeurs de priorité qui présentent un extrémum local.

9. Procédé mis en oeuvre par ordinateur selon l'une quelconque des revendications précédentes, dans lequel les données d'image acquises comprennent au moins un tableau de données à 5 dimensions, notamment dans lequel les données d'image sont stockées dans un format JPEG, dans lequel
- une première dimension du tableau de données se rapporte à une coordonnée de bloc x,
- une deuxième dimension du tableau de données se rapporte à une coordonnée de bloc y,
- une troisième dimension du tableau de données se rapporte à un nombre d'échantillons secondaires,
- une quatrième dimension du tableau de données se rapporte à des coefficients de fréquence spatiale, notamment dans lequel il y a 64 coefficients de fréquence,
- une cinquième dimension du tableau de données se rapporte à une profondeur de bit de chaque coefficient de fréquence, notamment dans lequel la profondeur de bit est de 16 bits pour chaque coefficient de fréquence, dans lequel le tableau primaire (1) comprend la première, la deuxième et la troisième dimension, et dans lequel chaque tableau secondaire comprend la quatrième et la cinquième dimension, dans lequel un premier profil de priorité est un profil de priorité bidimensionnel associé à la première et la deuxième dimension, et dans lequel un second profil de priorité est associé à la troisième dimension, dans lequel l'indice indexe les valeurs de tableau de la quatrième et la cinquième dimension comprises dans chaque tableau secondaire, notamment dans lequel les coefficients de fréquence sont transmis en fonction de la norme JPEG qui définit la transmission d'ordre pour les coefficients de fréquence, dans lequel l'indice indexe les valeurs de tableau de sorte que les coefficients de fréquence sont transmis séquentiellement, notamment de sorte que tous les bits d'un coefficient de fréquence sont transmis avant qu'un coefficient de fréquence suivant ne soit transmis.

10. Procédé mis en oeuvre par ordinateur selon l'une quelconque des revendications précédentes, dans lequel un récepteur sélectionne ou ajuste au moins un des profils de priorité et transmet des informations comprenant les profils de priorité à l'émetteur et/ou dans lequel l'émetteur sélectionne ou ajuste au moins un des profils de priorité et transmet des informations comprenant les profils de priorité à un récepteur.

11. Procédé mis en oeuvre par ordinateur selon la revendication 10, dans lequel le récepteur est agencé dans un véhicule et l'image est une carte, notamment une carte météorologique comprenant la position du véhicule, tel qu'un aéronef, une voiture ou un navire, dans lequel les profils de priorité forment un profil de priorité bidimensionnel priorisant la transmission de données d'image liées à l'emplacement dans l'image, dans lequel la priorité de transmission est la plus élevée, notamment a un maximum local à la position du véhicule sur l'image de sorte que les informations adjacentes sont transmises avec la priorité la plus élevée et des informations davantage à l'écart de la position du véhicule dans l'image sont transmises avec une priorité plus faible.

12. Procédé mis en oeuvre par ordinateur selon l'une quelconque des revendications précédentes, dans lequel l'indice est déterminé à partir d'au moins un profil d'indice (8) notamment au moyen d'un ordre de bits du tableau secondaire (2) ou par un ordre aléatoirement sélectionné.

13. Procédé mis en oeuvre par ordinateur pour reconstruire progressivement une image ou un film au niveau d'un récepteur comprenant les étapes consistant à :
- fournir un indice comprenant une pluralité de valeurs d'indice (102) au récepteur,
- fournir un ou plusieurs profils de priorité (3) ou un profil de priorité agrégé au récepteur, dans lequel un profil de priorité agrégé est reçu d'un émetteur et/ou stocké au niveau du récepteur, dans lequel ledit profil de priorité agrégé est exprimé en tant que fonction et est continu,
- recevoir des informations concernant des données d'image représentant au moins une image bidimensionnelle (100),
- générer au niveau du récepteur un tableau de données n-dimensionnel de valeurs de tableau devant être reçues pour les données d'image, dans lequel les données d'image sont agencées dans le tableau de données n-dimensionnel de sorte que le long de chaque dimension du tableau de données, un aspect d'informations d'image est stocké, dans lequel un premier aspect d'informations d'image qui est agencé le long d'une première et d'une seconde dimension du tableau de données est associé à un emplacement dans l'image (100),
- déterminer m dimensions du tableau de données n-dimensionnel pour former un tableau primaire m-dimensionnel (1), dans lequel ledit tableau primaire (1) comprend des tableaux secondaires (2), dans lequel chaque tableau secondaire (2) comprend les valeurs de tableau (101) devant être reçues du tableau de données et dans lequel les valeurs de tableau (101) s'étendent dans les d dimensions restantes du tableau de données, dans lequel d = n - m, de sorte que chaque élément du tableau primaire (1) est constitué d'un tableau secondaire (2) au sein duquel les d = n - m dimensions restantes sont stockées, de sorte que chaque dimension du tableau de données s'étend soit dans le tableau primaire (1), soit dans le tableau secondaire (2), dans lequel la taille de la dimension respective reste la même, dans lequel des dimensions du tableau de données concernant une profondeur de bit sont sélectionnées pour être comprises dans le tableau secondaire (2), dans lequel les valeurs de tableau (101) devant être reçues des tableaux secondaires (2) sont indexées avec l'indice, dans lequel ledit indice est le même pour tous les tableaux secondaires, dans lequel la détermination du tableau primaire (1) et des tableaux secondaires (2) est basée sur l'indice et le profil de priorité agrégé,
- associer le profil de priorité agrégé aux dimensions correspondantes du tableau primaire (1), dans lequel le profil de priorité agrégé confère une priorité variable de transmission aux tableaux secondaires (2) agencés le long de la/des dimension(s) associée(s) du tableau primaire (1),
- recevoir des valeurs de tableau (101) d'un émetteur notamment en fonction de la priorité de transmission et notamment en fonction de l'indice associé à la valeur de tableau pour reconstruire une image reçue avec les valeurs de tableau reçues,
- chaque fois que des valeurs de tableau sont reçues au niveau du récepteur ou à des intervalles de temps prédéfinis, reconstruire une image reçue avec les valeurs de tableau reçues, l'au moins un profil de priorité et l'indice de sorte que des données d'image associées à des valeurs de tableau ayant une priorité plus élevée de transmission peuvent être affichées d'abord au niveau du récepteur.

14. Programme informatique, dans lequel le programme informatique comprend du code de programme informatique qui, lors de son exécution sur un ordinateur, exécute le procédé mis en oeuvre par ordinateur selon une des revendications 1 à 12 et/ou la revendication 13.

15. Système, dans lequel ledit système comprend
- un émetteur configuré pour exécuter les étapes du procédé mis en oeuvre par ordinateur selon une des revendications 1 à 12 et/ou le programme informatique selon la revendication 14 qui doivent/doit être exécuté(es) au niveau de l'émetteur, et
- au moins un récepteur configuré pour exécuter les étapes du procédé mis en oeuvre par ordinateur selon la revendication 13 et/ou le programme informatique selon la revendication 14 qui doivent/doit être exécuté(es) au niveau du récepteur.
